# EUROPEAN PATENT APPLICATION

(11) **EP 1 852 860 A1**
(43) Date of publication of application: **07.11.2007**
(21) Application number: 06714085.5
(22) Date of filing: 20.02.2006
(51) Int. Cl.: G11B 7/24

(54) **OPTICAL RECORDING MEDIUM AND METHOD FOR MANUFACTURING SAME, SUBSTRATE AND USE THEREOF, AND STAMPER AND METHOD FOR MANUFACTURING SAME**

(30) Priority: 18.02.2005 JP 2005042817
(71) Applicant: FUJIFILM Corporation, Minato-ku Tokyo 106-8620 (JP)
(72) Inventor: SATOU, Takehiko, ome, Odawara-shi, Kanagawa, 2500001 (JP); SHIBATA, Michihiro, ome, Odawara-shi, Kanagawa, 2500001 (JP)
(74) Representative: Höhfeld, Jochen
(86) International application number: PCT/JP2006/302944
(87) International publication number: WO 2006/088178

(57) **Abstract**

The present invention presents an optical recording medium capable of forming visible images of excellent visibility by using laser light, and a method for manufacturing the same.

An optical recording medium has a first substrate on which an information recording layer and an image recording layer are formed in this order, and a second substrate formed on the image recording layer, in which a surface of the image recording layer side of the second substrate is roughened. A method for manufacturing an optical recording medium having a first substrate on which at least an information recording layer and an image recording layer are formed in this order, and a second substrate formed on the image recording layer, includes a roughening process of roughening a surface at the image recording layer-forming side of the second substrate, an image recording layer forming process of forming the image recording layer on the roughened surface of the second substrate, an information recording layer forming process of forming the information recording layer on the first substrate, and a laminating process of adhering the first substrate and second substrate.

## Description

### Field of the Invention

The present invention relates to an optical recording medium and a method for manufacturing same, a substrate and a method for using same, and a stamper and a method for manufacturing same, and more particularly to an optical recording medium having a label side for laser recording and a method for manufacturing same, and a substrate and a method for using same, and a stamper and a method for manufacturing same applicable to them.

### Technical background

In optical recording media such as CD-R and DVD-R, on the opposite side of recording side on which electronic information is recorded, a label is often adhered, and such label has printed visible information showing contents of electronic information recorded on the recording side such as tune titles of music data, and titles for identifying recorded data. Titles and other data are printed on a circular label sheet by a printer, and the label sheet is adhered to the opposite side of recording side of the optical recording medium.

However to manufacture an optical recording medium having desired visible images such as titles recorded on a label side, a printer is needed in addition to a disk drive. Therefore, after recording on recording side of an optical recording medium by using a disk drive, once the optical recording medium is taken out of the disk drive, and a label sheet printed by a printer must be adhered.

An optical recording medium that can display an image by changing contrast of surface side and back side by using a laser marker on the opposite side of recording side on which electronic information is recorded is proposed (see, for example, patent document 1). According to this method, without requiring other device such as a printer, desired images can be recorded on the label side of the optical recording medium by the drive of the optical recording medium. In this method, however, the visibility of image information is not sufficiently pursued, and further improvement is demanded.

For example, when a visible image recording layer is formed on a substrate at other side on which groves are regularly formed same as the surface side of a substrate forming a recording layer of DVD-R, grooves function like diffraction grating to external light, and strong interference occurs, and visibility of recorded images is deteriorated. Or even if visible image recording layer is formed on a smooth surface without groove, specular reflection light from reflection layer of visible image recording layer side and from the light incident side of substrate is strong, and surrounding light is printed and the visibility is deteriorated.
If the label side of disk is touched by fingers, fingerprints are prominent.
Patent document 1: Japanese Patent Application Laid-Open (JP-A) No. 11-66617

### DISCLOSURE OF THE INVENTION

### Problems to be Solved by the Invention

The present invention is devised in the light of the problems of the prior art, and is hence intended to achieve the following objects. It is an object of the invention to present an optical recording medium capable of forming highly visible images by using laser light, and a method for manufacturing the same. It is a further object to present a substrate having a roughened surface, excellent in visibility, and less prominent in fingerprints even on the label side surface, and a method for using the same. It is another object to present a stamper having a roughened surface, excellent in visibility, and less prominent in fingerprints on the label side surface, and a method for manufacturing the same.

### Means for Solving the Problems

The problems can be solved by the following means of the invention.
The invention relates to an optical recording medium comprising a first substrate on which at least an information recording layer and an image recording layer are formed in this order, and a second substrate formed on the image recording layer, wherein a surface of an image recording layer side of the second substrate is roughened. In the optical recording medium, since the image recording layer side surface of the substrate is roughened, specular reflection is suppressed, and highly visible images can be formed.

In the optical recording medium of the invention, preferably, the maximum height (Rz) of the roughened surface of the second substrate is 0.3 to 5 µm, and the mean length (RSm) of roughness curve element is 10 to 500 µm. By defining in this range, rainbow light accompanied by light interference on roughened surface is eliminated, and visibility is improved. Besides, fingerprints on the surface of label side are less prominent.

The invention relates to a method for manufacturing an optical recording medium having a first substrate on which at least an information recording layer and an image recording layer are formed in this order, and a second substrate formed on the image recording layer, the method comprising a roughening process of roughening a surface at the image recording layer-forming side of the second substrate, an image recording layer forming process of forming the image recording layer on the roughened surface of the second substrate, an information recording layer forming process of forming the information recording layer on the first substrate, and a laminating process of adhering the first substrate and second substrate such that the information recording layer and the image recording layer facing each other as inner layers. By the method for manufacturing an optical recording medium of the invention, the optical recording medium of the invention can be manufactured efficiently.

As the method for manufacturing an optical recording medium of the invention, preferably, at least one of first to fifth aspects given below should be applied. More preferably, parts of first to fifth aspects should be properly combined and applied.

(1) In a first aspect, roughening of the roughening process is conducted by molding the second substrate by using a stamper roughened at a side contacts the second substrate, and roughening the image recording layer-forming side of the second substrate.

According to the first aspect, same injection molding as in ordinary optical disk can be applied, and the productivity can be enhanced.

(2) In a second aspect, roughening of the roughening process is conducted by molding the second substrate by using a molding die roughened at a side contacts the second substrate, and roughening the image recording layer-forming side of the second substrate.

According to the second aspect, same injection molding as in ordinary optical disk can be applied, and stamper is not needed, and productivity can be improved.

(3) In a third aspect, roughening of the roughening process is conducted by molding the second substrate, and then applying a resin dispersion of fine particles on the image recording layer forming-side, curing the resin, and roughening the image recording layer-forming side of the second substrate.

(4) In a fourth aspect, roughening of the roughening process is conducted by molding the second substrate, and then machine-processing the image recording layer-forming side so as to roughening the image recording layer-forming side of the second substrate.

(5) In a fifth aspect, roughening of the roughening process is conducted by molding the second substrate, and then chemically processing the image recording layer-forming side so as to roughen the image recording layer-forming side of the second substrate.

The invention is characterized by using a substrate of which at least one side is roughened. The method for use of substrate is characterized by using such substrate in the optical recording medium.

Other feature is a stamper having one roughened side. A manufacturing method for stamper is characterized by roughening one side of the stamper.

### Effects of the Invention

The invention realizes an optical recording medium capable of forming clearly visible images by using laser light, and a method for manufacturing the same. Owing to roughening, a substrate having excellent characteristics and a method for using the same can be presented. Owing to roughening, a stamper having excellent characteristics and a method for manufacturing the same can be presented.

### BRIEF DESCRIPTION OF THE DRAWINGS

Fig. 1 is a schematic diagram of an example of layer composition showing an optical recording medium of the present invention.
Fig. 2 is a schematic diagram of other example showing a layer composition of the optical recording medium of the invention.
Fig. 3 is a block diagram of structure of an example of the optical recording medium recording apparatus capable of handling the optical recording medium of the invention.
Fig. 4 is a diagram of structure of optical pickup as a constituent element of the optical recording medium recording apparatus.
Fig. 5 is a diagram for explaining image data contents used for forming visible images on the image recording layer of the optical recording medium by the optical recording medium recording apparatus.
Fig. 6 is a diagram for explaining laser light emission control contents for expressing shading of images when forming visible images on the image recording layer of the optical recording medium by the optical recording medium recording apparatus.
Fig. 7 is a diagram for explaining control method for laser light when forming visible images on the image recording layer of the optical recording medium by the optical recording medium recording apparatus.
Fig. 8 is a diagram for explaining laser power control contents by laser power control circuit as a constituent element of the optical recording medium recording apparatus.
Fig. 9 is a diagram of return light of laser light emitted to image recording layer of the optical recording medium from an optical pickup of the optical recording medium recording apparatus.
Fig. 10 is a diagram of FG pulse generated depending on rotation amount of spindle motor by frequency generator 21 as a constituent element of the optical recording medium recording apparatus and clock signal generated on the basis of FG pulse.
Fig. 11 is a flowchart for explaining operation of the optical recording medium recording apparatus.
Fig. 12 is a flowchart for explaining operation of the optical recording medium recording apparatus.
Fig. 13 is a diagram showing a disk ID recorded in the image recording layer of the optical recording medium.
Fig. 14 is a diagram showing a shape of return light of laser light received by photo detector of the optical pickup of the optical recording medium recording apparatus.
Fig. 15 is a diagram for explaining size of beam spot diameter of laser light emitted to the image recording layer of the optical recording medium by the optical pickup of the optical recording medium recording apparatus.
Fig. 16 is a diagram for explaining a method for detecting an event that the laser light emission position of the optical recording medium recording apparatus has passed the reference position of the optical recording medium.
Fig. 17 is a diagram for explaining a method for detecting an event that the laser light emission position of the optical recording medium recording apparatus has passed the reference position of the optical recording medium.
Fig. 18 is a timing chart for explaining the operation of the optical recording medium recording apparatus when forming visible images by emitting laser light to an image recording layer of the optical recording medium.
Fig. 19 is a diagram showing the image recording layer of the optical recording medium irradiated with laser light by the optical recording medium recording apparatus.

### BEST MODE FOR CARRYING OUT THE INVENTION

### [Optical recording medium and method for manufacturing the same]

The optical recording medium of the present invention has a first substrate on which at least an information recording layer and an image recording layer are formed in this order, and a second substrate formed on the image recording layer. The image recording layer side surface of the second substrate is roughened. Since the image recording layer side surface is roughened, visibility of formed images can be enhanced. This is considered because the light emitted from outside is scattered at the image recording layer side of the second substrate. On the other hand, if the opposite side of the image recording layer side is roughened, recording light of visible image is scattered and the sensitivity is lowered and visible images can be hardly recorded. The optical recording medium of the invention may also have a third substrate disposed between the information recording layer and the image recording layer.

The maximum height (Rz) of the roughened surface of the second substrate (hereinafter, referred to as a roughened surface in some cases) is 0.3 to 5 µm, and the mean length (RSm) of roughness curve element is 10 to 500 µm. By defining in this range, visibility is improved in particular.

Roughened surface may be formed in the entire surface of the side contacting with the image recording layer of the second substrate, but specifically it is preferred to form in a range of 20 mm to 58 mm from the center. On the other hand, if roughened surface is disposed in a range of less than 20 mm, the optical pickup can be hardly inserted in a range of less than 20 mm, role of the roughened surface may not be exhibited sufficiently. If exceeding 58 mm, by contrast, it tends to be hard to clean the edge portion of the image recording layer. Forming method for the roughened surface is explained below (roughening method).

Structure of the optical recording medium of the invention includes, for example, DVD type structure (such as DVD-R and HD DVD). That is, in laminated type, the first substrate forming information recording layer and second substrate forming image recording layer are adhered together by way of the adhesive layer.

The "second substrate" of the invention includes also a substrate provided on the opposite side of the first substrate across the information recording layer, cover layer, and transparent sheet. Therefore, other structure of the optical recording medium of the invention includes CD type structure (including CD-R). Such structure is composed by forming information recording layer, image recording layer, and cover layer on the substrate in this order. The optical recording medium of the invention also includes the Blue-ray Disk (BD) structure.
The roughened surface of the optical recording medium of the invention may be a surface that roughened the surface of the image recording layer side of intermediate layer formed adjacently on the second substrate. When roughening the surface of the image recording layer side of intermediate layer, roughened surface may not be always provided on the second substrate. Such intermediate layer includes protective layer, such as protective layer consisted of UV cured resin.

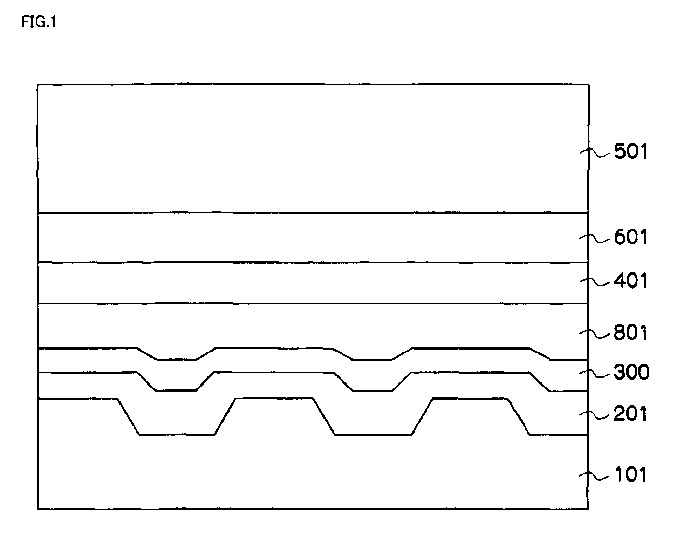

Fig. 1 shows an example of schematic sectional view showing an optical recording medium of the invention. The drawing shows that some parts are magnified for the ease of understanding.

The optical recording medium includes a first substrate 101 on which an information recording layer 201 and a reflection layer 300 are formed, and a second substrate 501 on which an image recording layer 601 and a reflection layer 401 are formed, which are laminated together by way of an adhesive layer 801 so that the reflection layers may be located at the inner side. The image recording layer 601-forming side of the second substrate 501 is roughened.

When recording optical information in optical recording medium, or when reproducing recorded information, laser light of specified wavelength (650 to 670 nm in the case of DVD-R, 400 to 410 nm or less in the case of HD DVD) is emitted from the first substrate 101 side.

When recording a visible image on the image recording layer 601, specified laser light (laser light of, for example, linear velocity 3.5 m/s, wavelength 660 nm, NA = 0.6, panel surface 10 mW) is emitted from the second substrate side, the illuminated portion is degenerated to change the contrast, and visible images are formed. Since images can be thus formed by laser light, without using printer or the like, desired images can be efficiently recorded on the label side (image recording side) of the optical recording medium by the optical recording medium drive. Besides, since the image recording side surface of the second substrate is roughened, visibility of image can be enhanced.

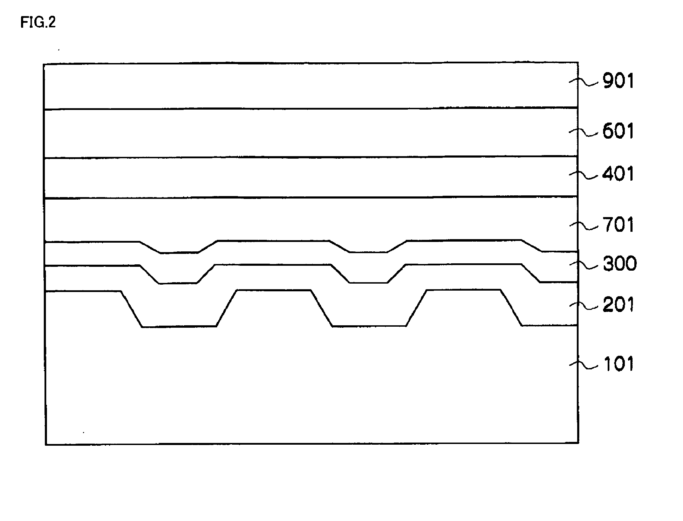

The layer composition shown in Fig. 1 and Fig. 2 is only an example, and the layer composition is not limited to the layer order shown above, but may be partly changed over, or other known layer may be provided. Each layer may be formed either by a single layer or by plural layers.

In the case of CD type structure, as shown in Fig. 2 by using same reference numerals in the parts corresponding to Fig. 1, an information recording layer 201, a reflection layer 300, a protective layer 701, a reflection layer 401, and an image recording layer 601 are formed in this order on a first substrate 101, and a roughened cover layer 901 is formed on the image recording layer 901. In this configuration, since the surface of the image recording layer 601 side of the cover layer 901 is roughened, visibility of images can be also enhanced.

When recording optical information on this optical recording medium, or when reproducing the recorded information, laser light of specified wavelength (for example, about 660 nm) is emitted from the first substrate 101 side.

When recording visible images on the image recording layer 601, laser light of specified amount is emitted from the second substrate side, the illuminated portion is degenerated to change the contrast, and visible images are formed. Since images can be thus formed by laser light, without using printer or the like, desired images can be efficiently recorded on the label side (image recording side) of the optical recording medium by the optical recording medium drive. Besides, since the image recording side surface of the second substrate is roughened, visibility of image can be improved.

The DVD type optical recording medium of the invention can be manufactured in the following procedure. The method for manufacturing of the optical recoding layer of the invention includes a roughening process of roughening the surface at the image recording layer-forming side of the second substrate, an image recording layer forming process of forming the image recording layer on the roughened surface of the second substrate, an information recording layer forming process of forming the information recording layer on the first substrate, and a laminating process of adhering the first substrate and second substrate such that the information recording layer and the image recording layer facing each other as inner layers. In the information recording layer forming process and the image recording layer forming process, as required, reflection layer or protective layer is further formed. In the case of CD type optical recording layer, on the first substrate, at least a cover layer having the information recording layer, the image recording layer, and a roughened surface can be formed, and the substrates and layers shown in this manufacturing method are specifically described below.

The information recording layer is a layer for recording and reproducing information by laser light used in recording and reproduction. In particular, digital information or coded information is recorded. The recording layer may be either an pigment recording layer or a phase changing recording layer, and the pigment recording layer is preferred.

Specific examples of a pigment contained in the information recording layer include a cyanine pigment, an oxonol pigment, an azo pigment, a phthalocyanine pigment, a triazole compound (including benzotriazole compound), a triazine compound, a melocyanine compound, an aminobutadiene compound, a cinnamic acid compound, a benzo-oxazole compound, pyrromethene compound, and squalilium compound. These compounds may have a metal atom in the center of coordination.

Pigments disclosed in the following publications may be also used: JP-A No. 4-74690, JP-A No. 8-127174, JP-A No. 11-53758, JP-A No. 11-334204, JP-A No. 11-334205, JP-A No. 11-344206, JP-A No. 11-334207, JP-A No. 2000-43423, JP-A No. 2000-108513, and JP-ANo. 2000-158818.

Among these compounds, in particular, cyanine pigment, azo pigment and phthalocyanine pigment are preferred for CD-R type optical recording medium, cyanine pigment, oxonol pigment, azo pigment (including Ni, Co complex) and pyrromethene compound are preferred for DVD-R type optical recording medium, and cyanine pigment, oxonol pigment, azo pigment, phthalocyanine pigment, benzotriazole compound, and triazine compound are preferred for Blu-ray Disk and HD DVD.

More particularly, cyanine pigment, azo pigment and phthalocyanine pigment are preferred for CD-R type optical recording medium, cyanine pigment, oxonol pigment, and azo pigment (including Ni, Co complex) are preferred for DVD-R type optical recording medium, and cyanine pigment, oxonol pigment, azo pigment, and phthalocyanine pigment are preferred for Blu-ray Disk and HD DVD.

Information recording layer is formed by dissolving pigment or other recording substance in a proper solvent together with binder to prepare coating solution, applying this coating solution on the first substrate to form a coat film, and drying the coat film. Concentration of recording substance in coating solution is generally in a range of 0.01 to 15 % by mass, preferably 0.1 to 10 % by mass, more preferably 0.5 to 5 % by mass, and further preferably 0.5 to 3 % by mass.

The information recording layer can be formed by deposition, sputtering, CVD, or solvent applying method, and the solvent applying method is preferred. In this case, aside from the pigment, as desired, a quencher, a binder or the like may be dissolved in solvent to prepare coating solution, and this coating solution is applied on substrate surface to form a coat film, and it is dried.

Examples of solvent used in the coating solution include esters such as butyl acetate, ethyl lactate, and cellosolve acetate; ketones such as methyl ethyl ketone, cyclohexane, and methyl isobutyl ketone; chlorinated hydrocarbons such as dichloromethane, 1,2-dichloroethane, and chloroform; amides such as dimethyl formamide; hydrocarbons such as methyl cyclohexane; ethers such as dibutyl ether, diethyl ether, tetrahydrofurane, and dioxane; alcohols ethanol such as n-propanol, isopropanol, n-butanol, and diacetone alcohol; fluorine solvents such as 2,2,3,3-tetrafluoropropanol; glycol ethers such ethylene glucol monomethyl ether, ethylene glycol monoethyl ether, and propylene glycol monomethyl ether.

These solvents may be used either alone or in combination of two or more kinds in consideration of solubility of the pigment. In the coating solution, further, various additives may be used depending on the application, such as antioxidant, UV absorber, plasticizer, and lubricant.

When using the binder, examples of the binder include natural organic high polymer substance such as gelatin, cellulose derivative, dextran, rosin, and rubber; hydrocarbon resins such as polyethylene, polypropylene, polystyrene, and polyisobutylene; vinyl resins such as polyvinyl chloride, polyvinylidene chloride, polyvinyl chloride, and polyvinyl chloride-polyvinyl acetate copolymer; acrylic resins such as methyl polyacrylate, and methyl polymethacrylate; and synthetic organic high polymers including initial condensates of thermosetting resin such as polyvinyl alcohol, polyethylene chlorinated, epoxy resin, butyral resin, rubber derivative, and phenol formaldehyde resin.

When using a binder as material of the information recording layer, the content of the binder is generally 0.01 to 50 times of mass of pigment, more preferably 0.1 to 5 times.

Applying method for solvent includes spray method, spin coat method, dip method, roll coat method, blade coat method, doctor roll method, screen printing method, and others. The information recording layer may be either single layer or multiple layers. Thickness of the information recording layer is generally 10 to 500 nm, preferably 15 to 300 nm, and more preferably 20 to 150 nm.

To enhance the light fastness of the information recording layer, the information recording layer may contain various fading preventive agents. Generally, singlet oxygen quencher is used as the fading preventive agent. Singlet oxygen quenchers disclosed in known patent publications may be used. Examples of publications include JP-A No. 58-175693, JP-A No. 59-31194, JP-A No. 60-18387, JP-A No. 60-19586, JP-A No. 60-19587, JP-A No. 60-335054, JP-A No. 60-36190, JP-A No. 60-36191, JP-A No. 60-44554, JP-A No. 60-44555, JP-A No. 60-44389, JP-A No. 60-44390, JP-A No. 60-54892, JP-A No. 60-47059, JP-A No. 68-209995, JP-A No. 4-25492, JP-B No. 1-38680, JP-B No. 6-26028, German Patent No. 350399, and Journal of Japan Society of Chemistry October 1992, p. 1141.

Content of the fading preventive agent such as singlet oxygen quencher is generally about 0.1 to 50 % by mass of mass of pigment, preferably 0.5 to 45 % by mass, more preferably 3 to 40 % by mass, and particularly preferably 5 to 25 % by mass.

In the case of the information recording layer of phase change type, it is preferred to use phase change type optical recording material consisted of Ag, Al, In, Te, or Sb capable of showing at least two states, that is, crystalline state and noncrystalline state. The recording layer may be formed by any known method. On the recording layer, as required, known dielectric layer may be formed preferably.

### (Image recording layer)

The optical recording medium of the invention has, as mentioned above, an image recording layer formed at the second substrate or cover layer side from the information recording layer. The image recording layer records visible images (visible information) desired by the user, such as characters, graphics and patterns. Visible images include, for example, disk title, content information, content thumbnail, related pattern, design pattern, copyright information, date of recording, recording method, recording format, barcode, and others.

The image recording layer is not specified in material as far as visual information such as text (characters), image and pattern can be recorded visibly by irradiation of laser light, and the material may be properly selected from the pigments explained in the information recording layer above.

In particular, the image recording layer is preferably a layer recording visible information by emitting laser light of specified power plural times substantially in the same trace, or a layer recording visible information by oscillating laser light of specified power in radial direction of the optical recording medium, and emitting plural times substantially in the same trace.

In the optical recording medium of the invention, components (pigment or phase change recording material) of the information recording layer and components of the image recording layer may be either same or different, but components are preferable to be different because the demanded characteristics are different between the information recording layer and image recording layer. Specifically, components of the information recording layer are preferred to be excellent in recording and reproducing performance, and components of the image recording layer are preferred to have high contrast of a recorded image. Among the aforementioned pigments, particularily, when using pigment, from the viewpoint of enhancement of contrast of recorded image, the image recording layer is preferred to be made of pigments, particularly cyanine pigment, phthalocyanine pigment, azo pigment, azo metal complex, oxazole pigment, and leuco dye.

Leuco dye can be used. Specific examples include crystal violet lactone; 3,3-bis (1-ethyl 2-methyl indole-3-yl) phthalide, 33-(4-diethylamino-2-ethoxy phenyl)-3-(1-ethyl 2-methyl indole-3-yl)-4-azaphthalide, and other phthalide compounds; 3-cyclohexyl methylamino-6-methyl-7-anilinoflluorane, 2-(2-chloroanilino)-6-dibutyl aminofluorane, 3-diethylamino-6-methyl-7-anilinofluorane, 3-dimethylamino-6-methyl-7-xylidine fluorane, 2-(2-chloroanilino)-6-diethyl aminofluorane, 2-anilino-3-methyl-6 (N-ethyl isopentylamino) fluorane, 3-diethylaamino-6-chloro-7-anilinofluorane, 3-benzyl ethylamino-6-methyl-7-anilinofluorane, 3-methyl propylamino-6-methyl-7-anilinofluorane, and other fluorane compounds.

The image recording layer can be formed by dissolving the pigment in a solvent to prepare a coating solution, and applying the coating solution. The solvent may be same as the solvent used in preparation of coating solution of the information recording layer. Other additives and coating method are same as in the forming method for the information recording layer.

Thickness of the image recording layer is preferably 0.01 to 50 µm, more preferably 0.02 to 20 µm, or further preferably 0.03 t o 5 µm.

### (First substrate)

First substrate (substrate of the information recording layer side, corresponding to reference numeral 101 in Fig. 1) is made of material arbitrarily selected from various materials used as substrate of a conventional optical recording medium.

Substrate material includes, for example, glass, polycarbonate, polymethyl methacrylate, other acrylic resins, polyvinyl chloride, vinyl chloride copolymer, and other vinyl chloride resin, epoxy resin, amorphous polyolefin and polyester, and they may be combined as desired. These materials are formed in film and used as rigid substrate. Among these materials, polycarbonate is particularly preferred from the viewpoint of humidity resistance, dimensional stability, and price.

Thickness of the first substrate is preferred to be 0.05 to 1.2 mm, or more preferably 0.1 to 1.1 mm.

The substrate has undulation (guide grooves) for tracking or undulations (pre-grooves) expressing information of address signal or the like.

In the case of DVD-R or DVD-RW, track pitch of pre-grooves is preferably 300 to 900 nm, more preferably 350 to 850 nm, and further preferably 400 to 800 nm.

Depth of pre-grooves (groove depth) is preferably 100 to 160 nm, more preferably 120 to 150 nm, and further preferably 130 to 140 nm. Depth width of pre-grooves (half width) is preferably 200 to 400 nm, more preferably 230 to 380 nm, and further preferably 200 to 350 nm.

To achieve a higher recording density, it is preferred to use a substrate having grooves of track pitch narrower than that of conventional DVD-R. In this case, the track pitch of grooves is preferred to be 280 to 450 µm, more preferably 300 to 420 nm, and further preferably 320 to 400 nm. Groove depth is preferably 15 to 150 nm, or more preferably 25 to 100 nm. Groove width is preferably 50 to 250 nm, or more preferably 100 to 200 nm.

In the case of CD-R, the track pitch of grooves is preferred to be 1.2 to 2.0 µm, more preferably 1.4 to 1.8 µm, and further preferably 1.55 to 1.65 µm. Groove depth is preferably 100 to 250 nm, more preferably 150 to 230 nm, and further preferably 170 to 210 nm. Pre-groove width is preferably 400 to 650 nm, more preferably 480 to 600 nm, and further preferably 500 to 580 nm.

On the first substrate surface side of the recording layer-forming side (groove forming side), an undercoat layer may be also provided for the purpose of improvement in smoothness, enhancement of adhesion, and prevention of degeneration of recording layer.

Materials of the undercoat layer include, for example, polymethyl methacrylate, acrylic acid-methacrylic acid copolymer, styrene-maleic anhydride copolymer, polyvinyl alcohol, N-methylol acrylamide, styrene-vinyl toluene copolymer, chlorosulfonated polyethylene, nitrocellulose, polyvinyl chloride, chlorinated polyolefin, polyester, polyimide, vinyl acetate-vinyl chloride copolymer, ethylene-vinyl acetate copolymer, polyethylene, polypropylene, polycarbonate, other high polymer substances, silane coupling agents, and other surface reformers. The undercoat layer is formed by dissolving or dispersing such substance in proper solvent to prepare coating solution, and applying the coating solution on substrate surface by spin coating, dip coating, extrusion coating, or other applying method. Thickness of undercoat layer is generally 0.005 to 20 µm, or preferably 0.01 to 10 µm.

### (Reflection layer)

To enhance the reflectivity at the time of reproduction of information, it is preferred to form a reflection layer adjacently to at least one selected from the information recording layer and the image recording layer. Light reflecting substance as material for the reflection layer is preferably a substance high in reflectivity to laser light. Examples thereof include Mg, Se, Y, Ti, Zr, Hf, V, Nb, Ta, Cr, Mo, W, Mn, Re, Fe, Co, Ni, Ru, Rh, Pd, Ir, Pt, Cu, Ag, Au, Zn, Cd, Al, Ga, In, Si, Ge, Te, Pb, Po, Sn, Bi, and other metal or semimetal stainless steel, and semiconductor material. These substances may be used either alone, or in combination of two or more kinds, or may be used as alloy.

Among these materials, preferred examples are Cr, Ni, Pt, Cu, Ag, Au, Al, and stainless steel. More preferred examples are Au metal, Ag metal, Al metal, or their alloys, and most preferred examples are Ag alloys (Ag-Nd-Cu and Ag-Pd-Cu).

The reflection layer is formed by, for example, depositing, sputtering, or ion plating the light reflective substance, forming on the substrate or the recording layer. Thickness of the reflection layer is generally 10 to 300 nm, or preferably 50 to 200 nm.

### (Adhesive layer)

The adhesive layer is provided for adhering laminated bodies together, or a laminated body including the first substrate and a second substrate, when manufacturing laminated optical recording medium of DVD type or the like. Component material of the adhesive layer is preferably photosetting resin, and a material with small curing shrinkage is preferred in order to prevent warping of disk. Examples of such photosetting resins include SD-640 and SD-661 manufactured by Dainippon Ink and Chemicals Incorporated, and SK6100, SK6300 and SK6400 manufactured by Sony Chemicals. Thickness of the adhesive layer is preferably 1 to 100 µm so as to have elasticity, more preferably 5 to 60 µm, and further preferably 20 to 55 µm.

### (Protective layer)

The protective layer is an arbitrary layer provided for preventing invasion of moisture or occurrence of flaw. Component materials of the protective layer includes ultraviolet curing resin, visible ray curing resin, thermosetting resin, silicon dioxide, and others, and ultraviolet curing resin is particularly preferred. Examples of ultraviolet curing resin include SD-640. Moreover SD-347, and SD-694 manufactured by Dainippon Ink and Chemicals Incorporated, and SKCD1051 manufactured by SKC may be used. Thickness of the protective layer is preferably 1 to 200 µm, or more preferably 50 to 150 µm.

### (Second substrate)

A second substrate having roughened surface (also called a dummy substrate or a protective substrate) is provided opposing to a first substrate in the case of laminated optical recording medium. Its material is the same as in the first substrate. Same as the in first substrate, no groove is needed at the image recording layer-forming side. Thickness of the second substrate is preferably 0.05 to 1.2 mm, more preferably 0.1 to 1.1 mm, or further preferably 0.5 to 0.7 mm.

In the second substrate, the roughening process of roughening the image recording layer-forming side is not particularly specified in this method, and any one of the following first to fifth roughening may be applied.

(1) In first roughening, a stamper having a roughened surface at the side contacting with the second substrate is used, and the image recording layer-forming side of the second substrate is roughened. More specifically, the stamper used when manufacturing the second substrate is roughened. In this roughening, desired level roughness is achieved by sand blasting or other blasting process. Chemical process may be applied as explained in fifth roughening. The stamper is installed in a die so that the roughened surface may contact with the resin material of the second substrate, and is molded in known method, and a second substrate having roughened surface at desires side is fabricated. In this case, the desired thickness is specified by maximum height (Rz) of the surface of 0.3 to 5 µm, and mean length (RSm) of roughness curve element of 10 to 500 µm.

(2) In second roughening, using a molding die roughened at one side contacting with the second substrate after molding, the image recording layer-forming side of the second substrate is roughened. Specifically, the intended side is roughened by using the molding die of the second substrate. The roughening method is same as in the first roughening, by using the specified die and molding in known method, a second substrate having roughened surface at one side is fabricated.

(3) In third roughening, a resin dispersion of fine particles is applied on the image recording layer-forming side after fabrication of the second substrate, and the resin is cured so that the image recording layer-forming side of the second substrate is roughened. The resin is preferably acrylate-containing ultraviolet curing resin, epoxy-containing or isocyanate-containing thermosetting resin, and the like.

Fine particles are inorganic fine particles of SiO₂ or Al₂O₃, and polycarbonate or acrylic resin particles. Volume-average particle size of fine particles is preferably 0.3 to 200 µm, or more preferably 0.6 to 100 µm. By adjusting the particle size and the addition amount of fine particles, a desired roughness of the roughened surface is obtained.

(4) In fourth roughening, the image recording layer-forming side after fabrication of the second substrate is machine-processed, and the image recording layer-forming side of the second substrate is roughened. Machining method is not particularly specified, and sand blasting and other blasting process are preferred.

(5) In fifth roughening, the image recording layer-forming side after fabrication of the second substrate is chemically processed so that the image recording layer-forming side of the second substrate is roughened. Chemical processing method is processing of one side of the second substrate after molding by applying a solvent, spraying, or etching. The solvent is preferably organic solvent such as dimethyl formamide, and also acidic solvents such as nitric acid, hydrochloric acid, and sulfuric acid can be used. Desired roughness is obtained by adjusting the normality of acidic solvent, or adjusting the coating time.

When the second substrate is a cover layer, this cover layer is provided for the purpose of protecting the information recording layer or the image recording layer physically and chemically, and aside from these purposes, in the invention, by roughening the cover layer at the image recording layer side, visibility of image is also improved. Thickness of cover layer is preferably 10 nm to 5 µm.

As the cover layer, a transparent sheet of polycarbonate or cellulose triacetate may be also used. In this case, thickness of transparent sheet is 0.01 to 0.2 m, preferably. The image recording layer side of transparent sheet can be roughened in any one of the above first to fifth roughening above.

The cover layer of the image recording layer side can be roughened by dispersing the fine particles mentioned in the third roughening in the resin, and forming into a sheet by drawing.

The roughened substrate explained above (same as second substrate mentioned in the specification) is used as a substrate of an optical recording medium on which at least the image recording layer and the information recording layer are formed in this order on one side of a substrate. Such substrate is used not only in such optical recording medium, but also in other optical member having image recording layer and capable of forming an image by light on the recording layer. In such optical member, at least image recording layer is formed on one side of substrate surface, and so only one side of substrate surface should be roughened. Optical member is realized, for example, by a seal.

### [Substrate and method for using same, Stamper and method for manufacturing same]

The substrate of the invention is roughened at least in one side. Method for using the substrate of the invention is a method that uses the substrate of the invention in the optical recording medium. It specifically corresponds to the second substrate mentioned in the optical recording medium of the invention.

The stamper of the invention is roughened at least in one side. The stamper can be manufactured in a method for manufacturing a stamper of the invention including a roughening process of roughening at least one side thereof. A specific example is a stamper of a first aspect mentioned in the roughening process of method for manufacturing an optical recording medium. The roughening method for manufacturing the stamper is preferably a processing method for blasting, or immersing in acidic solvent mentioned in the fifth roughening above, or applying and spraying the solution. Roughness can be controlled by adjusting the material, particle size, injection speed and other conditions of blast particles of blasting process. In the case of etching process, type of acidic solvent, normality and application time can be properly adjusted.

In this stamper, maximum height (Rz) of the roughened surface of substrate to be fabricated is 0.3 to 5 µm, and mean length (RSm) of roughness curve element is preferably 10 to 500 µm. Values of Rz and RSm of the roughened surface of stamper and substrate are measured by atomic force microscope (AFM), light interference type roughness gauge, or probe type roughness meter. In particular, the probe type roughness meter is preferred because the scanning length is long, and dynamic range in depth direction is wide.

### [Recording method]

In optical recording medium (optical disk) of the invention, recording of image in the image recording layer, and recording of optical information in the information recording layer can be realized by one optical recording medium drive (recording apparatus) having recording function in both layers. When one optical recording medium drive is used, either one layer of the image recording layer and information recording layer is recorded, the disk is turned to the reverse side, and other layer is recorded. An optical recording medium drive having a function of recording visible images on the image recording layer is disclosed, for example, in JP-A No. 2003-203348 and JP-A No. 2003-242750.

When recording visible images on the image recording layer, the recording apparatus tracks the optical recording medium and laser pickup by tracking grooves formed in the image recording layer, moves relatively along the surface of the optical recording medium, emits laser light in synchronism with the relative move toward the image recording layer by modulating depending on the text, pattern or image data for forming images, and thereby records visible images. Such configuration is disclosed in JP-A No. 2002-203321.

Image recording on the image recording layer of the optical recording medium of the invention is realized, specifically, by using the optical recording medium of the invention, and a recording apparatus capable of recording image information at least on the image recording layer of the optical recording medium.
First, the recording apparatus used in recording in optical recording medium of the invention is described.

### (Optical recording medium recording apparatus)

In the optical recording medium of the invention, recording of image in the image recording layer, and recording of optical information in the information recording layer are realized by one optical recording medium drive (recording apparatus) having recording function in both layers. When one optical recording medium drive is used, either one layer of the image recording layer and information recording layer is recorded, the disk is turned to the reverse side, and other layer is recorded.

The optical recording medium of the invention is preferably applied in the following apparatus and method.

For example, the optical recording medium recording apparatus in which the optical recording medium of the invention is preferably applied is
(1) an optical recording medium recording apparatus for recording information by emitting laser light to recording surface of the optical recording medium (for example, information recording layer (recording layer)), including an optical pickup for emitting laser light to optical recording medium, emission position adjusting unit for adjusting the emission position of laser light to the optical recording medium by the optical pickup, image forming control unit for controlling the optical pickup and emission position adjusting unit so that the visible image corresponding to the image information may be formed in the image recording layer of the optical recording medium when the optical recording medium forming the recording layer on one side and image recording layer on other side is set so that the image recording layer may be opposed to the optical pickup, and beam spot control unit for controlling the optical pickup so that the beam spot diameter of laser light emitted by the optical pickup to the image recording layer when forming the visible image may be larger than the beam spot diameter of laser light emitted by the optical pickup to the recording side when recording information.

According to this configuration, by emitting laser light to the image recording layer of the optical recording medium depending on the image data, the reflectivity changes according to the image corresponding to change in absorbance of the image recording layer, and a visible image corresponding to the image data can be formed. When forming such visible image, by increasing the beam spot diameter of laser light emitted to the image recording layer of the optical recording medium, laser light can be emitted to a larger area while the optical recording medium is rotated by one revolution, and the time required for forming a visible image can be shortened. Besides, the optical recording medium of the invention can also record a favorably visible image in this method.

The optical recording medium recording apparatus in the other aspect is
(2) an optical recording medium recording apparatus for recording information by emitting laser light to recording surface of the optical recording medium, including an optical pickup for emitting laser light to optical recording medium, emission position adjusting unit for adjusting the emission position of laser light to the optical recording medium by the optical pickup, image forming control unit, being unit for controlling the optical pickup and emission position adjusting unit so that the visible image corresponding to the image information may be formed in the image recording layer of the optical recording medium when the optical recording medium forming the recording layer on one side and image recording layer on other side is set so that the image recording layer may be opposed to the optical pickup, for controlling the intensity of laser light emitted by the optical pickup to the image recording layer to be equal either to first intensity hardly changing the image recording layer on the basis of the image information, or to second intensity larger than the first intensity and changing the image recording layer, and servo unit for detecting information about laser light emitted by the optical pickup to the optical recording medium, and controlling the optical pickup so as to emit the desired laser light on the basis of detection result, in which the image forming control unit controls so that the intensity of laser light emitted from the optical pickup may be first intensity for a specified time, regardless of the content of image information when the duration of intensity of laser light emitted by the optical pickup according to the control based on the image information being continuously second intensity exceeds a specified time, and the servo unit controls the optical pickup on the basis of the detection result of information about laser light emitted at first intensity.

According to this configuration, by emitting laser light to the image recording layer of the optical recording medium depending on the image data, the reflectivity changes according to the image corresponding to change in absorbance of the image recording layer, and a visible image corresponding to the image data can be formed. When forming such visible image, if the duration of the second intensity of the intensity of laser light corresponding to the image data changing the image recording layer continues for long, regardless of the image data, laser light of first intensity hardly changing in the image recording layer is emitted due to the laser light control, so that the laser light can be controlled on the basis of the emission result. The optical recording medium of the invention can record favorably visible images also in this method.

The optical recording medium recording apparatus in the other aspect is
(3) an optical recording medium recording apparatus for recording information by emitting laser light to recording surface of the optical recording medium, including an optical pickup for emitting laser light to optical recording medium, emission position adjusting unit for adjusting the emission position of laser light to the optical recording medium by the optical pickup, image forming control unit, being unit for controlling the optical pickup and emission position adjusting unit so that the visible image corresponding to the image information may be formed in the image recording layer of the optical recording medium, for controlling the intensity of laser light emitted by the optical pickup to the image recording layer to be equal either to first intensity hardly changing the image recording layer on the basis of the image information, or to second intensity larger than the first intensity and changing the image recording layer, and servo unit for detecting information about laser light emitted by the optical pickup to the optical recording medium, and controlling the optical pickup so as to emit the desired laser light on the basis of detection result, in which the image forming control unit controls so that the intensity of laser light emitted from the optical pickup may be first intensity for a specified time, regardless of the content of image information when the duration of intensity of laser light emitted by the optical pickup according to the control based on the image information being continuously second intensity exceeds a specified time, and the servo unit controls the optical pickup on the basis of the detection result of information about laser light emitted at first intensity.

According to this configuration, by emitting laser light to the image recording layer of the optical recording medium depending on the image data, the reflectivity of recording layer changes according to the image, and a visible image is formed according to the image data. When forming such visible image, if the duration of the second intensity of the intensity of laser light corresponding to the image data changing the image recording layer continues for long, regardless of the image data, laser light of first intensity hardly changing in the image recording layer is emitted due to the laser light control, so that the laser light can be controlled on the basis of the emission result. The optical recording medium of the invention can record favorably visible images also in this method.

The optical recording medium recording apparatus in the other aspect is
(4) an optical recording medium recording apparatus for recording information by emitting laser light to recording surface of the optical recording medium, including an optical pickup for emitting laser light to optical recording medium, emission position adjusting unit for adjusting the emission position of laser light to the optical recording medium by the optical pickup, image forming control unit for controlling the optical pickup and emission position adjusting unit so that the visible image corresponding to the image information may be formed in the image recording layer of the optical recording medium, when the optical recording medium having the recording surface formed at one side and image recording layer on other side is set so that the image recording layer may be opposed to the optical pickup, and relative position adjusting unit for adjusting the relative position relation of the side of the optical recording medium opposite to the optical pickup and the optical pickup, depending on whether the side of the optical recording medium opposite to the optical pickup is the image recording layer or the recording surface, when the optical recording medium is set in the optical recording medium recording apparatus.

According to this configuration, by emitting laser light to the image recording layer of the optical recording medium depending on the image data, the reflectivity changes according to the image corresponding to change in absorbance of the image recording layer, and a visible image corresponding to the image data can be formed. When the optical recording medium is set, depending on whether the image recording layer or the recording surface is set to be opposed to the optical pickup, the relative position of the optical pickup and the opposite side is adjusted. Therefore, if the distance of the optical pickup and the opposite side is different between when the recording surface is opposite to the optical pickup, and when the image recording layer is opposite to the optical pickup, problems due to difference in distance such as failure of focus and various controls can be suppressed. The optical recording medium of the invention can record favorably visible images also in this method.

The optical recording medium recording apparatus in the other aspect is
(5) an optical recording medium recording apparatus for recording information by emitting laser light to recording surface of the optical recording medium, including an optical pickup for emitting laser light to optical recording medium, emission position adjusting unit for adjusting the emission position of laser light to the optical recording medium by the optical pickup, servo unit for controlling the emission position adjusting unit so that the laser light may be emitted along a guide groove on the basis of reflected light from the optical recording medium of the laser light emitted from the optical pickup, when the optical recording medium having the recording surface formed at one side and image recording layer on other side, with a spiral guide groove formed in the recording surface, is set so that the image recording layer may be opposed to the optical pickup, and image forming control unit for controlling the laser light emitted from the optical pickup so that the visible image corresponding to image information may be formed in the image recording layer of the optical recording medium, while the emission position of laser light is moved along the guide groove by the servo unit. The optical recording medium of the invention can record favorably visible images also in this method.

According to this configuration, by emitting laser light to the image recording layer of the optical recording medium depending on the image data, the reflectivity changes according to the image corresponding to change in absorbance of the image recording layer, and a visible image corresponding to the image data can be formed. At this time, when the guide groove formed in the recording surface is detected, the laser light emission position is moved along the detected guide groove to record in the recording surface, and therefore a visible image can be formed without requiring complicated laser light emission position control.

The optical recording medium recording apparatus in the other aspect is
(6) an optical recording medium recording apparatus for recording information by emitting laser light to recording surface of the optical recording medium, including an optical pickup for emitting laser light to optical recording medium, rotation driving unit for rotating the optical recording medium, clock signal output unit for issuing a clock signal at frequency corresponding to the rotating speed of the optical recording medium by the rotation driving unit, image forming control unit for controlling the laser light emitted from the optical pickup on the basis of image information in every period of clock signal by the clock signal output unit, being unit for controlling the optical pickup so that the visible image corresponding to image information may be formed in the image recording layer of the optical recording medium, when the optical recording medium having the recording surface formed at one side and image recording layer on other side is set so that the image recording layer may be opposed to the optical pickup, rotation detecting unit for detecting one revolution of the optical recording medium from specified reference position by the rotation driving unit, and emission position adjusting unit for moving the emission position of laser light by optical pickup by a specified amount in specified radial direction of the optical recording medium installed in the optical recording medium recording apparatus, when the rotation detecting unit detects one revolution of the optical recording medium from specified reference position, while the laser light is being emitted from the optical pickup for forming the visible image in the image recording layer of the optical recording medium.

According to this configuration, by emitting laser light to the image recording layer of the optical recording medium depending on the image data, the reflectivity changes according to the image corresponding to change in absorbance of the image recording layer, and a visible image corresponding to the image data can be formed. At this time, when forming the visible image, in every period of clock signal at frequency corresponding to the rotating speed of the optical recording medium, that is, at every specified rotation angle of the optical recording medium, laser light emission is controlled for forming a visible image, and the visible image is formed in the content (for example, thickness) depending on the image data at the position of every specified angle of the optical recording medium. The optical recording medium of the invention can record favorably visible images also in this method.

The optical recording medium recording apparatus in the other aspect is
(7) an optical recording medium recording apparatus for recording information by emitting laser light to recording surface of the optical recording medium, including an optical pickup for emitting laser light to optical recording medium, rotation driving unit for rotating the optical recording medium, rotation detecting unit for detecting one revolution of the optical recording medium from specified reference position by the rotation driving unit, image forming control unit for controlling the optical pickup so that the visible image corresponding to image information may be formed in the image recording layer of the optical recording medium, when the optical recording medium having the recording surface formed at one side and image recording layer on other side is set so that the image recording layer may be opposed to the optical pickup, and emission position adjusting unit for moving the emission position of laser light by optical pickup by a specified amount in specified radial direction of the optical recording medium installed in the optical recording medium recording apparatus, when the rotation detecting unit detects one revolution of the optical recording medium from specified reference position, while the laser light is being emitted from the optical pickup for forming the visible image in the image recording layer of the optical recording medium, in which the image forming control unit controls the optical pickup so as to emit laser light from the optical pickup to form the visible image from the specified reference position of the image recording layer of the optical recording medium rotated by the rotation driving unit, and not to emit laser light for forming the visible image in the region from a position ahead by a specified amount until the emission position of laser light reaches the specified reference position of the optical recording medium to the specified reference position.

According to this configuration, by emitting laser light to the image recording layer of the optical recording medium depending on the image data, the reflectivity changes according to the image corresponding to change in absorbance of the image recording layer, and a visible image corresponding to the image data can be formed. At this time, when forming the visible image, while the optical recording medium is being rotated, laser light is emitted from reference position of the optical recording medium, and a visible image is formed, whereas laser beam for forming visible image is not emitted in a region immediately before the laser light emission position returns to the reference position. Therefore, if the laser light emission position control is disturbed due to unstable rotation of the optical recording medium or other reason, and the laser light is emitted continuously from the reference position, the optical recording medium is rotated by one revolution, and the emission position passes the reference position again, that is, if the emission position of laser light moves to a position overlapping with the position where the laser has been already emitted, emission of laser light for forming visible image to this position can be suppressed, and deterioration of quality of formed visible image can be prevented.

The optical recording medium recording apparatus in the other aspect is
(8) an optical recording medium recording apparatus for recording information by emitting laser light to recording surface of the optical recording medium, including an optical pickup for emitting laser light to optical recording medium, emission position adjusting unit for adjusting the emission position of laser light to the optical recording medium by the optical pickup, disk identifying unit for acquiring disk identification information for judging the type of the optical recording medium installed in the optical recording medium recording apparatus, and image forming control unit for controlling the optical pickup and emission position adjusting unit depending on the type of optical recording unit judged by the disk identifying unit, being unit for controlling the optical pickup and emission position adjusting unit so that the visible image corresponding to image information may be formed in the image recording layer of the optical recording medium, when the optical recording medium having the recording surface formed at one side and image recording layer on other side is set so that the image recording layer may be opposed to the optical pickup.

According to this configuration, by emitting laser light to the image recording layer of the optical recording medium depending on the image data, the reflectivity changes according to the image corresponding to change in absorbance of the image recording layer, and a visible image corresponding to the image data can be formed. At this time, when forming the visible image, visible image forming is controlled depending on the type of the installed disk.

The optical recording medium recording apparatus in the other aspect is
(9) an optical recording medium recording apparatus for recording information by emitting laser light to recording surface of the optical recording medium, including an optical pickup for emitting laser light to optical recording medium, modulating unit for modulating the information supplied from outside, and laser light control unit for controlling the laser light emitted from the optical pickup depending on the information supplied from the modulating unit, further including prohibiting unit for prohibiting modulation by the modulating unit on the image information supplied from outside, when a visible image is formed in the image recording layer of an optical recording medium having the recording surface formed at one side and image recording layer on other side, and image forming control unit for controlling the laser light control unit so that the visible image corresponding to the image information not modulated and supplied from the modulating unit may be formed in the image recording layer of the optical recording medium, when the image recording layer of the optical recording medium is set so as to be opposed to the optical pickup.

According to this configuration, by emitting laser light to the image recording layer of the optical recording medium depending on the image data, the reflectivity changes according to the image corresponding to change in absorbance of the image recording layer, and a visible image corresponding to the image data can be formed. At this time, when forming the visible image, modulation by modulating unit for modulating record data is prohibited when information is recorded in recording surface, and hence image data is not modulated, and therefore without requiring any particular data transfer mechanism for forming visible image corresponding to image data, data transfer is realized in combination when information is recorded in recording surface.

The optical recording medium recording apparatus in the other aspect is
(10) an optical recording medium recording apparatus for recording information by emitting laser light to recording surface of the optical recording medium, including an optical pickup for emitting laser light to optical recording medium, emission position adjusting unit for adjusting the emission position of laser light to the optical recording medium by the optical pickup, and image forming control unit for controlling the optical pickup and emission position adjusting unit so that the visible image corresponding to image information may be formed in the image recording layer of the optical recording medium, when the optical recording medium having the recording surface formed at one side and image recording layer on other side is set so that the image recording layer may be opposed to the optical pickup, in which the image forming control unit controls the laser light emitted from the optical pickup depending on the degree of gradation shown in the image information.

According to this configuration, by emitting laser light to the image recording layer of the optical recording medium depending on the image data, the reflectivity changes according to the image corresponding to change in absorbance of the image recording layer, and a visible image corresponding to the image data can be formed. At this time, when forming the visible image, laser light can be controlled depending on the degree of gradation of each position (coordinates) on the image recording layer shown in the image data.

The optical recording medium recording apparatus in the other aspect is
(11) an optical recording medium recording apparatus for recording information by emitting laser light to recording surface of the optical recording medium, including rotating unit for rotating the optical recording medium, an optical pickup for emitting laser light to the optical recording medium rotated by the rotating unit from one side, and movable substantially in a radial direction of the optical recording medium, and laser light level control unit for adjusting the level of laser light emitted from the optical pickup either in first intensity hardly changing the recording layer and image recording layer of the optical recording medium, or in second intensity hardly changing the recording layer and changing the coloration of the image recording layer, on the basis of the image data expressing the visible image to be formed, being unit for adjusting the level of laser light emitted from the optical pickup when the visible image is formed in the image recording layer.

According to this apparatus, in the optical recording medium of the invention, information can be recorded same as in the prior art by emitting laser light to the recording layer, and a visible image can be also formed in the image recording layer. Further, information recording and visible image forming can be executed by emitting laser light from a same side of the optical recording medium, and hence the user is liberated from the complicated work of turning the optical recording medium by turning to the reverse side and setting again.

An image forming method on the image recording layer of the optical recording medium of the invention is a method for forming a visible image on the image recording layer formed on the opposite side to the recording surface of the optical recording medium, by using an optical recording medium recording apparatus having an optical pickup for recording information by emitting laser light to the recording surface of the optical recording medium, being characterized by controlling the laser light emitted by the optical pickup so that a visible image corresponding to image information may be formed in the image recording layer of the optical recording medium, while moving the emission position of the laser light by the optical pickup in the image recording layer along a specified spiral or concentric route, and controlling the emission timing of laser light to be emitted to each route belonging to each sectoral unit region, in control of laser light, by dividing the optical recording medium into plural sector areas and defining regions including a specified number of (plural) routes adjacent to each other as unit regions, so as to express contrast of unit regions in the visible image.

According to this method, by emitting laser light to the image recording layer of the optical recording medium depending on image data, the reflectivity changes according to the image corresponding to change in absorbance of the image recording layer, and a visible image corresponding to the image data can be formed. At this time, when forming the visible image, laser light emission timing can be controlled depending on the degree of gradation of each position (coordinates) on the image recording layer shown in the image data, so that a visible image expressing gradation an be formed.

### A. Specific configuration of the optical recording medium recording apparatus

The optical recording medium recording apparatus is an optical recording medium recording apparatus for recording information by emitting laser light to recording surface of the optical recording medium, having a function of not only recording information on the recording surface, but also forming a visible image corresponding to image data by emitting laser light to the image recording layer of the optical recording medium having the image recording layer formed on the opposite side to the recording surface. In this apparatus, in optical recording medium using specified pigments, visible image can be recorded not only in the image recording layer, but also in the recording layer for recording ordinal digital data.

### - Configuration of the optical recording medium recording apparatus -

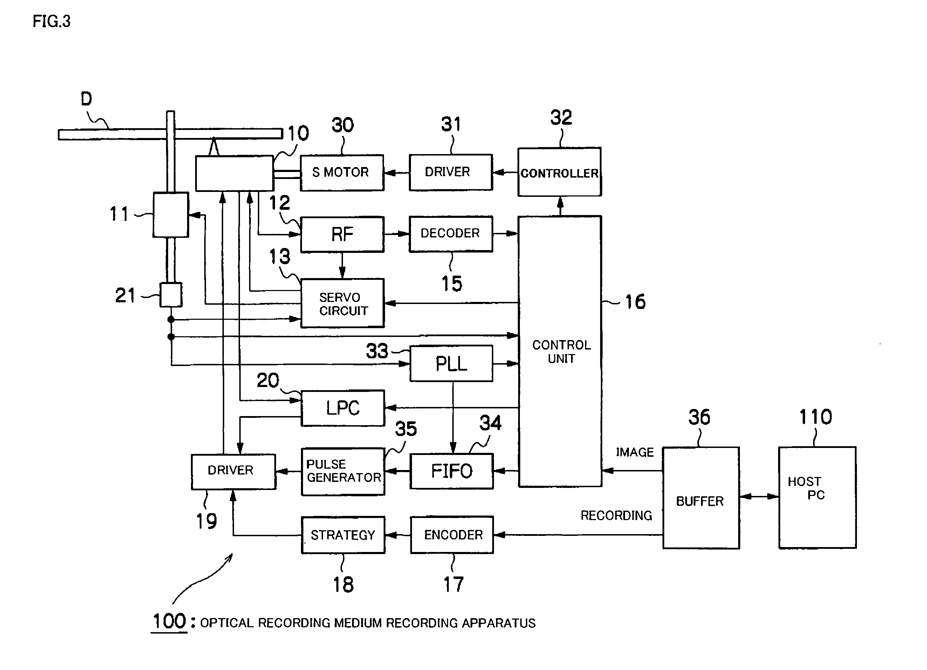

Fig. 3 is a block diagram of configuration of the optical recording medium recording apparatus. As shown in the diagram, this optical recording medium recording apparatus 100 is connected to a host personal computer (PC) 110, and includes an optical pickup 10, a spindle motor 11, an RF (radio frequency) amplifier 12, a servo circuit 13, a decoder 15, a control unit 16, an encoder 17, a strategy circuit 18, a laser driver 19, a laser power control circuit (LPC) 20, a frequency generator 21, a stepping motor 30, a motor driver 31, a motor controller 32, a PLL (phase locked loop) circuit 33, a FIFO (first in first out) memory 34, a drive pulse generator 35, and a buffer memory 36.

The spindle motor 11 is a motor for rotating and driving the optical recording medium D as the object that records data and its rotating speed is controlled by the servo circuit 13. In the optical recording medium recording apparatus 100 of the embodiment, it is designed to record by CAV (Constant Angular Velocity) system, and the spindle motor 11 rotates at a specified angular velocity specified by the control unit 16.

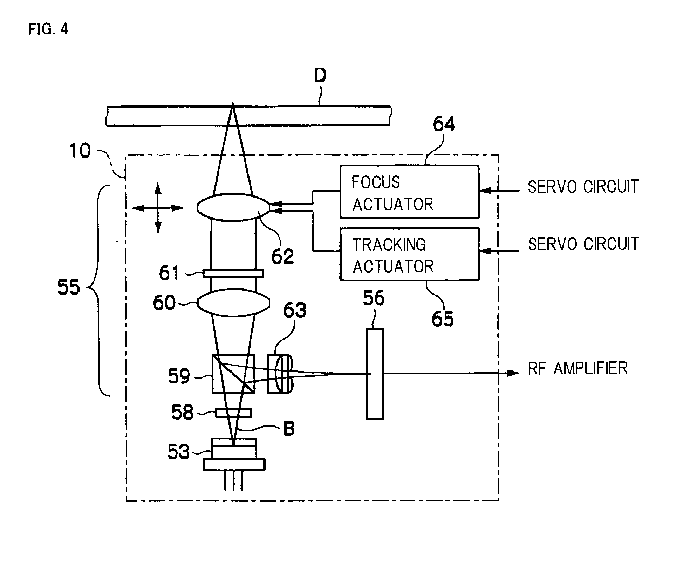

The optical pickup 10 is a unit for emitting laser light to the optical recording medium D rotated by the spindle motor 11, and its structure is shown in Fig. 4. As shown in the diagram, the optical pickup 10 includes a laser diode 53 for emitting laser beam B, a diffraction grating 58, an optical system 55 for focusing the laser beam B on the surface of the optical recording medium D, and a photo detector 56 for receiving reflected light.

In the optical pickup 10, the laser diode 53 receives a driving current from the laser driver 19 (see Fig. 3), and emits a laser beam B at an intensity corresponding to the driving current. The optical pickup 10 splits the laser beam B emitted from the laser diode 53 into main beam, leading beam, and following beam by a diffractor grating 58, and these three laser beams passed through polarized beam splitter 59, collimator lens 60, quarter wavelength plate 61, and objective lens 62, and focused on the surface of the optical recording medium D. Three laser beams reflected on the surface of the optical recording medium D are transmitted again through objective lens 62, quarter wavelength plate 61, and collimator lens 60, and reflected by polarized beam splitter 59, and supplied into the photo detector 56 by way of cylindrical lens 63. The photo detector 56 supplies the received signal into the RF amplifier 12 (see Fig. 3), and the received signal is supplied into the control unit 16 or servo circuit 13 by way of the RF amplifier 12.

The objective lens 62 is held by focus actuator 64 and tracking actuator 65, and is movable in optical axis direction of laser beam B and radial direction of the optical recording medium D. The focus actuator 64 and tracking actuator 65 move the objective lens 62 in the optical axis direction and radial direction depending on the focus error signal and tracking error signal supplied from the servo circuit 13 (see Fig. 3). The servo circuit 13 generates focus error signal and tracking error signal on the basis of the detected signal supplied to the photo detector 56 and RF amplifier 12, and moves the objective lens 62 as mentioned above, thereby executing focus control and tracking control.

The optical pickup 10 has a front monitor diode not shown, and while the laser diode 53 is emitting laser light, an electric current is generated in the front monitor diode which has received the exit light, and this current is supplied from the optical pickup 10 to the laser power control circuit 20 shown in Fig. 3.

The RF amplifier 12 amplifies the RF signal modulated by EFM (eight to fourteen modulation) supplied from the optical pickup 10, and issues the amplified RF signal to the servo circuit 13 and decoder 15. The decoder 15 demodulates the RF signal of EFM supplied from the RF amplifier 12 by EFM, and generated reproduced data.

The servo circuit 13 receives an instruction signal from the control unit 16, FG pulse signal of frequency corresponding to the rotating speed of spindle motor 11 supplied from frequency generator 21, and RF signal from RF amplifier 12. On the basis of the supplied signals, the servo circuit 12 controls the rotation of spindle motor 11, controls the focus of optical pickup 10, and controls the tracking. When recording information on recording surface (information recording layer) of the optical recording medium D, or when forming visible image on the image recording layer of the optical recording medium D (see Fig. 1), the driving method for spindle motor 11 includes a driving method for the optical recording medium D at specified angular velocity (CAV: Constant Angular Velocity), or a rotating and driving method for the optical recording medium D at specific linear velocity (CLV: Constant Linear Velocity), or in the optical recording medium recording apparatus 100 explained in Fig. 1 and after, the CAV system is employed, and the servo circuit 13 rotates and drives the spindle motor 11 at a specified angular velocity instructed by the control unit 16.

The buffer memory 36 accumulates the information supplied from the host PC 110, that is, information to be recorded in the recording surface of the optical recording medium D (record data), and information corresponding to visible image to be formed in the image recording layer of the optical recording medium (image data). The record data accumulated in the buffer memory 36 is issued to the encoder 17, and the image data is issued to the control unit 16.

The encoder 17 modulates the record data supplied from the buffer memory 36 by EFM, and sends to the strategy circuit 18. The strategy circuit 18 processes the EFM signal supplied from the encoder 17 by time axis correction, and sends out to the laser driver 19.

The laser driver 19 drives the laser diode 53 (see Fig. 4) of the optical pickup 10 according to the signal modulated depending on the record data supplied from the strategy circuit 18, and control of the laser power control circuit 20.

The laser power control circuit 20 controls the laser power emitted from the laser diode 53 (see Fig. 4) of the optical pickup 10. Specifically, the laser power control circuit 20 control the laser driver 19 so that the laser light of the light coinciding with the target value of optimum laser power instructed by the control unit 16 may be emitted from the optical pickup 10. This laser power control by the laser power control circuit 20 is a feedback control for controlling so that the laser light of desired intensity may be emitted from the optical pickup 10, by using the current value supplied from the front monitor diode of the optical pickup 10.

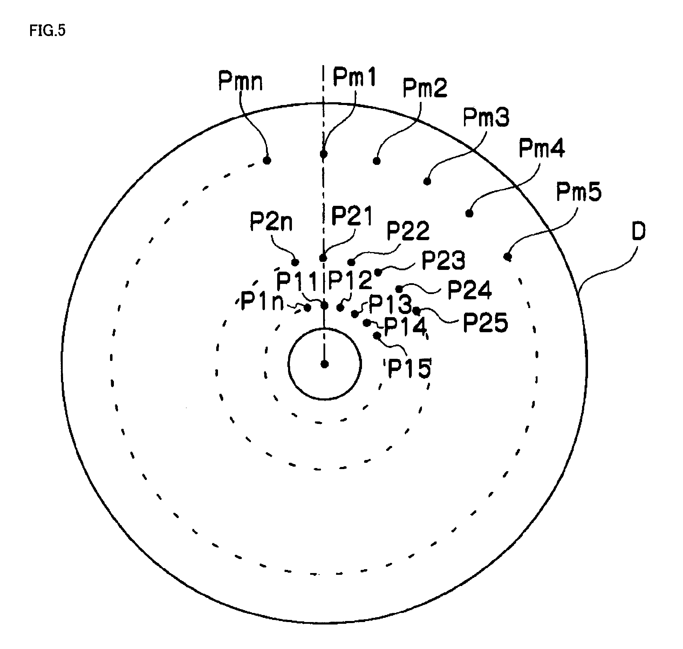

The FIFO memory 34 sequentially receives and accumulates the images supplied from the host PC 110 and accumulated in the buffer memory 36 by way of the control unit 16. Herein, the image memory accumulated in the FIFO memory 34, that is, the image data supplied in the optical recording medium recording apparatus 100 from the host PC 110 includes the following information. The image data is data for forming visible image on the surface of a circular optical recording medium D, and as shown in Fig. 5, information showing degree of gradation (shading) is described in every one of multiple concentric n coordinates (indicated by black spots in the diagram) centered on the center O of the optical recording medium D. The image data is data describing information showing the degree of gradation of individual coordinates, from coordinate points P11, P12, ..., P1n belonging to the innermost side circle of the information showing the gradation degree of coordinates, coordinates P21, P22, ..., P2n belonging to the one outer side circle, and coordinates Pmn of the circle of the outermost side, and information showing the gradation degree of coordinates on such polar coordinates is supplied on the FIFO memory 34 in this order. Fig. 5 is a schematic diagram for clearly showing the relative positions of coordinates, and actual coordinates are disposed more densely than shown in the diagram. In the host PC 110, when image data is formed on the photosensitive screen of the optical recording medium D by general bit map system, the bit map data is converted into such polar coordinate data, and the converted image data is transmitted from the host PC 110 to the optical recording medium recording apparatus 100.

On the basis of the supplied image data, when forming a visible image on the image recording layer of the optical recording medium D, the FIFO memory 34 receives a clock signal for image recording from the PLL circuit 33. The FIFO memory 34 issues the information showing the gradation degree of the first accumulated coordinate to the drive pulse generator 35, every time receiving the clock pulse of clock signal for image recording.

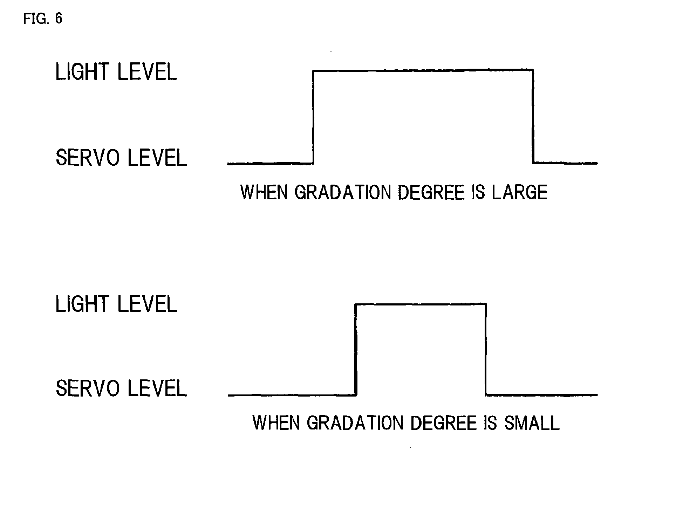

The drive pulse generator 35 generates a drive pulse for controlling emission timing of laser light emitted from the optical pickup 10. The drive pulse generator 35 generates a drive pulse in pulse width corresponding to the information showing the gradation degree of every coordinates supplied from the FIFO memory 34. For example, when the gradation degree of certain coordinate is relatively large (large in density), as shown in top of Fig. 6, a drive pulse of wide pulse width of light level (second intensity) is generated, and when the gradation degree is relatively small, as shown in bottom of Fig. 6, a drive pulse of narrowed pulse width of light level is generated. Herein, the light level is the power level clearly changing in the reflectivity by changing in the image recording layer when laser power of such level is emitted to the image recording layer of the optical recording medium D, and when such drive pulse is supplied to the laser driver 19, the laser light of the light level is emitted from the optical pickup 10 for the duration corresponding to the pulse width. Therefore, when the gradation degree is large, laser light of light level is emitted for a longer time, and the reflectivity is changed in a larger area among unit regions of the image recording layer of the optical recording medium D, so that the user visually recognizes that such region is a region of high density. In the embodiment, by varying the length of region for changing the reflectivity per unit region (unit length), the gradation degree shown in image data is expressed. The servo level (first intensity) is a power level hardly changed in the image recording region when laser power of such level is emitted to the image recording layer of the optical recording medium D, and in a region not required to change the reflectivity, without emitting laser light of light level, laser light of the corresponding servo level should be emitted.

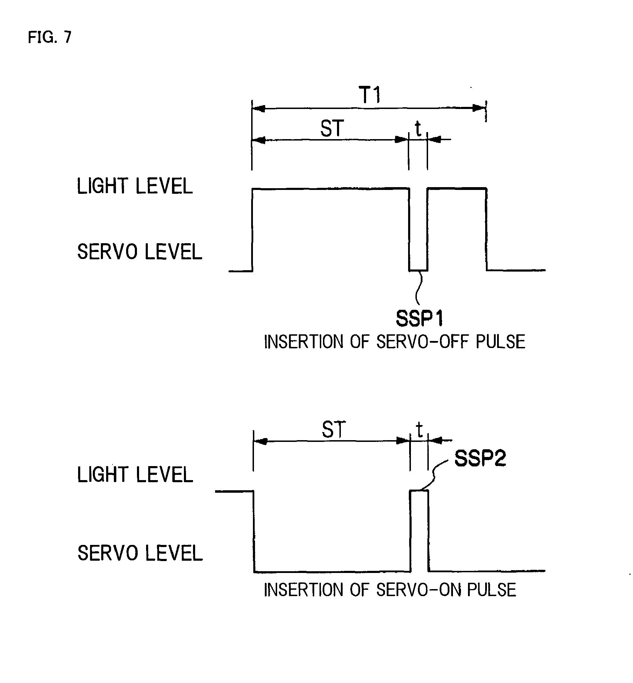

The drive pulse generator 35 generates a drive pulse according to the information showing the gradation degree of each coordinate, and inserts a pulse of light level of very short period, or inserts pulse of servo level, regardless of information showing the gradation degree, if necessary for executing laser power control by laser power control circuit 20 or focus control and tracking control by servo circuit 13. For example, as shown in top of Fig. 7, if necessary to emit laser light of light level for period of time T1 in order to express visible image according to gradation degree of certain coordinate in image data, when the time T1 is longer than the specified servo period ST for controlling laser power, servo-off pulse (SSP1) of very short time t is inserted when passing servo period ST from the moment of generating the pulse of light level. On the other hand, as shown in bottom of Fig. 7, if necessary to emit laser light of servo level for servo period ST in order to express visible image according to gradation degree of certain coordinate in image data, servo-on pulse (SSP2) is inserted after servo period ST from the moment of generation of pulse of servo level.

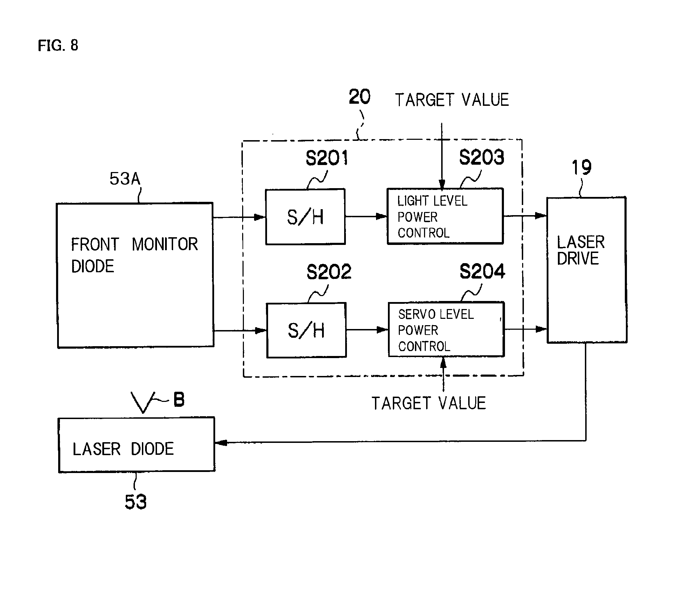

As mentioned above, laser power control by laser power control circuit 20 is executed on the basis of the current (current of the value corresponding to the intensity of laser light) supplied from the front monitor diode receiving the laser light emitted from the laser diode 53 (see Fig. 4) of the optical pickup 10. More specifically, as shown in Fig. 8, the laser power control circuit 20 holds the value corresponding to the intensity of emitted laser light intensity received by the front monitor diode 53a as sample value (S201, S202). When the light level is emitted as target value, that is, when the drive pulse of light level (see Fig. 6, Fig. 7) is generated, on the basis of sample hold result, laser power is controlled so as to emit the laser light of light level target value supplied from the control unit 16 (S203). While emitting the servo level as target value, that is, while drive pulse of servo level (see Fig. 6, Fig. 7) is generated, on the basis of sample hold result, laser power is controlled so as to emit laser light of target servo level supplied from the control unit 16 (S204). Therefore, if the pulse of light level or servo level is not issued continuously for a longer time than specified servo period ST (sample period), regardless of the content of image data, as mentioned above, servo-off pulse SSP1 and servo-on pulse SSP2 are inserted by force, so that the laser power is controlled to the each level as mentioned above.

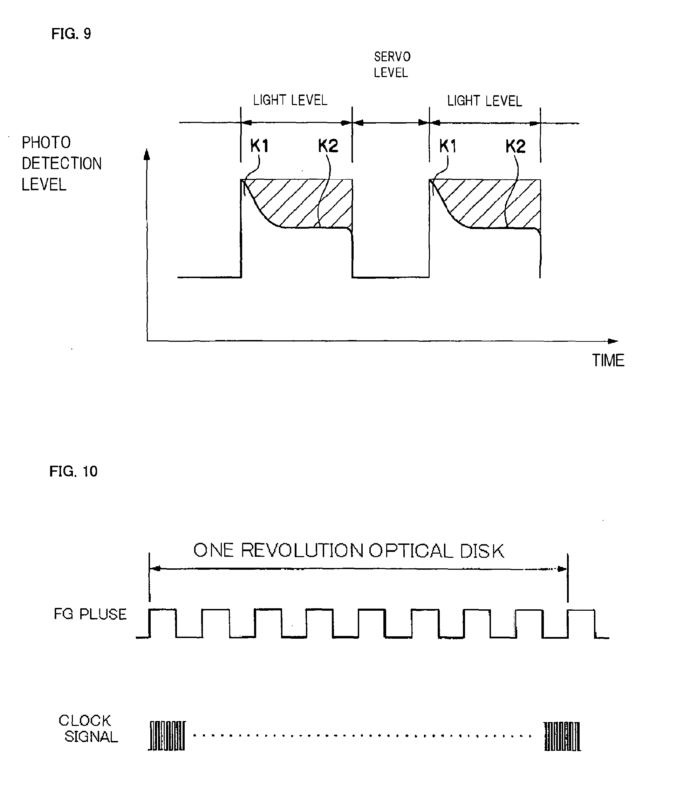

As mentioned above, insertion of servo-off pulse SSP1 is intended not only for controlling the laser power, but also for controlling the focus or controlling the tracking by servo circuit 13. That is, tracking control and focus control are executed on the basis of RF signal received by photo detector 56 (see Fig. 4) of optical pickup 10, that is, return light (reflected light) from optical recording medium D of laser light emitted by laser diode 53. Fig. 9 shows an example of signal received by the photo detector 56 when laser light is emitted. As shown in the diagram, the reflected light when emitting laser light of light level includes peak portion K1 upon rise of laser light, and element of shoulder portion K2 later becoming constant in level, and the shaded area in the diagram is considered to be energy used in forming image of the image recording layer. The energy used in forming image in the image recording layer is not always stable, but may be varied by circumstances. That is, the reflected light of laser light of light level contains much noise, and stable reflected light may not be always obtained, and by using this reflected light, accurate focus control or tracking control may be disturbed. Therefore, as mentioned above, when laser light of light level is emitted intermitted for a long time, reflected light of laser light of servo level cannot be obtained, and accurate focus control and tracking control are not realized.

By insertion of servo-off pulse SSP1, reflected light of laser light of servo level can be obtained periodically, and focus control and tracking control are executed on the basis of the obtained reflected light. When forming a visible image in the image recording layer of the optical recording medium, different from the case of recording in recording surface, it is not required to trace along the preliminarily formed pre-grooves (guide grooves). In this embodiment, therefore, target value of tracking control is a fixed value (a specific offset voltage is determined). Such control method is applicable not only in forming of image information in the image recording layer, but also in forming of image information in recording surface. When a material changing not only in reflectivity but also in coloration when irradiated with laser beam is used in the recording surface (recording layer), an image can be formed not only in the image recording layer but also in recording surface. When visible image is recorded in recording surface in this manner, however, desired data cannot be recorded in the portion where visible image is formed, and it is hence preferred to separate preliminarily into data recording region and visible image forming region.

Time of insertion of servo-off pulse SSP1 or servo-off pulse SSP2 is desired to be shortest time in a range not disturbing execution of servo controls, such as laser power control, tracking control, and focus control, and by a very short insertion time, servo controls can be executed practically with no adverse effects of formed visible image.

Back to Fig. 3, the PLL circuit (signal output unit) 33 multiplies FG pulse signal at frequency corresponding to the rotating speed of spindle motor 11 supplied from the frequency generator 21, and issues a clock signal used in formation of visible image described below. The frequency generator 21 generates FG pulse signal at frequency corresponding to the spindle rotating speed by making use of counter electromotive current obtained from motor driver of spindle motor 11. For example, as shown in the top of Fig. 10, when the frequency generator 21 generates eight FG pulses during one revolution of spindle motor 11, that is, one revolution of the optical recording medium D, as shown in the bottom of Fig. 10, the PLL circuit 33 issues clock signals by multiplying FG pulses (for example, frequency of five times of FG pulse signal, or 40 pulses of H level during one revolution of the optical recording medium D), that is, clock signals are issued at frequency corresponding to the rotating speed of the optical recording medium D rotated by the spindle motor 11. Such clock signals by multiplying the FG pulse signals are generated from the PLL circuit 33 to the FIFO memory 34, and in one period of clock signals, that is, in every rotation of disk D by specified angle, data showing gradation degree of one coordinate is issued from the FIFO memory 34 to the drive pulse generator 35. Thus, by using the PLL circuit 33, clock signals by multiplying the FG pulses can be generated, but when a motor sufficiently stable in rotation driving capacity is used as spindle motor 11, instead of the PLL circuit 33, a quartz oscillator may be used, and clock signals by multiplying the FG pulses, that is, clock signals at frequency corresponding to the rotating speed of the optical recording medium D can be generated.

The stepping motor 30 is a motor for moving the optical pickup 10 in radial direction of the optical recording medium D set in the optical recording medium D. The motor driver 31 rotates and drives the stepping motor 30 by the amount corresponding to the pulse signals supplied from the motor controller 32. The motor controller 32 generates pulse signals corresponding to the moving amount and moving direction, according to the move start instruction including the moving direction and moving amount in radial direction of optical pickup 10 commanded from the control unit 16, and issues to the motor driver 31. When the spindle motor 30 moves the optical pickup 10 in radial direction of the optical recording medium D, and the spindle motor 11 rotates the optical recording medium D, the laser beam emission position of the optical pickup 10 can be moved to various positions of the optical recording medium D, and these constituent elements are combined to constitute the emission position adjusting unit.

The control unit 16 is consisted of CPU (central processing unit), ROM (read only memory), RAM (random access memory) and others, and controls the parts of the optical recording medium recording apparatus 100 according to the program stored in the ROM, and centrally controls the recording process on recording surface of the optical recording medium D, and image forming process on the image recording layer of the optical recording medium D. This is the explanation of configuration of the optical recording medium recording apparatus 100.

### B. Operation of the optical recording medium recording apparatus

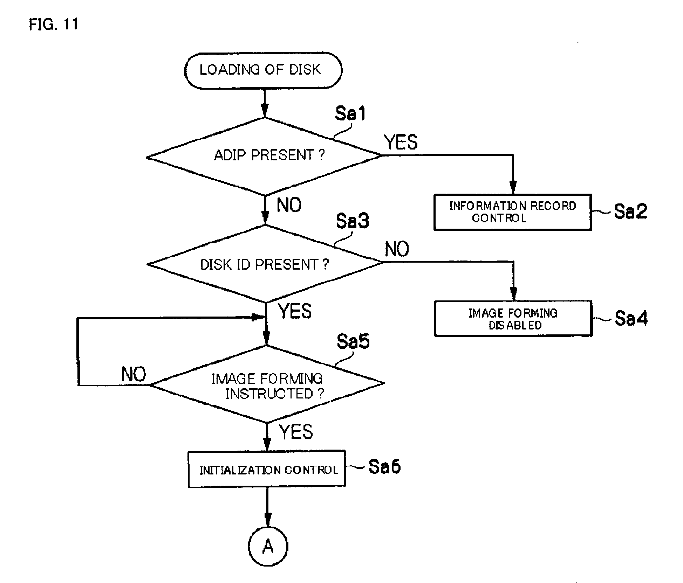

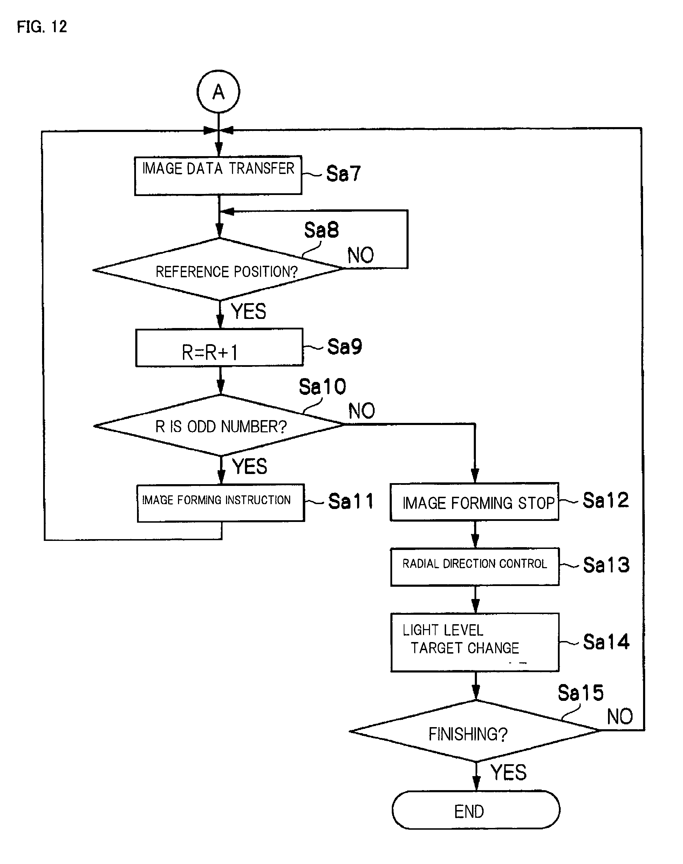

Operation of the optical recording medium recording apparatus 100 is explained below. As described above, the optical recording medium recording apparatus 100 is designed to record information such as music data supplied from the host PC 110 in the recording surface of the optical recording medium D, and form visible image corresponding to image data supplied from the host PC 110 in the image recording layer of the optical recording medium D. The operation of this optical recording medium recording apparatus 100 capable of recording information and forming visible image is explained by referenced to Fig. 11 and Fig. 12.

When an optical recording medium D is loaded in the optical recording medium recording apparatus 100, the control unit 16 controls the optical pickup 10, and detects the format of the optical recording medium of the side of the loaded optical recording medium D opposite to the optical pickup 10. For example, in the case of DVD-R, land prepit signal or prerecord signal is detected, or in the case of DVD+R, presence or absence of ADIP (address in pre-groove) is detected (step Sa1). If such information is not recorded, it is not recognized as optical recording medium.

From the loaded optical recording medium D, for example, when land prepit signal or prerecord signal is detected in the case of DVD-R, or when ADIP is detected in the case of DVD+R, it is judged that the optical recording medium D is loaded so that the recording surface may be opposed to the optical pickup 10, and the control unit 16 controls for recording record data supplied from the host PC 110 on the recording surface (step Sa2). This control for recording the record data is as in the operation in conventional optical recording medium recording apparatus (DVD-R or DVD+R), and the explanation is omitted.

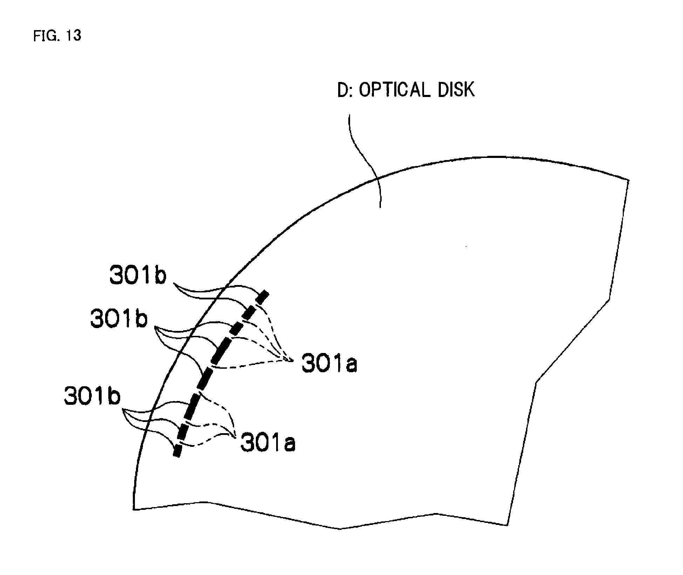

When prepit signal showing applicable optical recording medium is detected from the loaded optical recording medium D, it is judged that the optical recording medium D loaded so that the image recording layer may be opposed to the optical pickup 10, and the control unit 16 judges if the disk ID of the loaded optical recording medium D can be obtained or not (step Sa3). The disk ID of the optical recording medium D may be also contained in the prepit signal. Or, as shown in Fig. 13, for example, visible image corresponding to the information by decoding the disk ID may be described along the circumference of outermost circle at image recording layer side of the optical recording medium D. In Fig. 13, along the circumference of outermost circle, reflection region 301a and non-reflection region 301b of length corresponding to the code are formed, and the disk ID is described in the image recording layer of the optical recording medium D. The control unit 16 traces the emission position of laser light of optical pickup 10 along the circumference of outermost circle of optical recording disk D, and acquires the disk ID from the reflected light.

Therefore, if reflection region 301a and non-reflection region 301b corresponding to the disk ID are not formed in the outermost circle of the image recording layer, this optical recording medium D is judged to be an ordinary optical recording medium not having image recording layer (such as CD-R, DVD-R). When disk ID is not obtained, the control unit 16 judges that the optical recording medium D is not applicable to formation of visible image (step Sa4), and the result is noticed to the user.

When disk ID is obtained from the optical recording medium D, waiting until receiving image forming instruction including image data from the host PC 110 (step Sa5), when image forming instruction is received, the control unit 16 controls to initialize the image recording layer of the optical recording medium D to be prepared for forming visible image (step Sa6). More specifically, the control unit 16 sends out an instruction to the motor controller 32 for controlling the servo circuit 13 so that the spindle motor 11 may be rotated at specified angular velocity, or moving the optical pickup 10 to the initial position at the innermost circular side in radial direction of the optical recording medium D, and thereby drives the stepping motor 30.

In initialization control for forming image, the control unit 16 can also instruct a target value of focus control to the servo circuit 13, so that the laser light of larger beam spot diameter may be emitted to the image recording layer of the optical recording medium D, than in the case of recording information in recording surface.

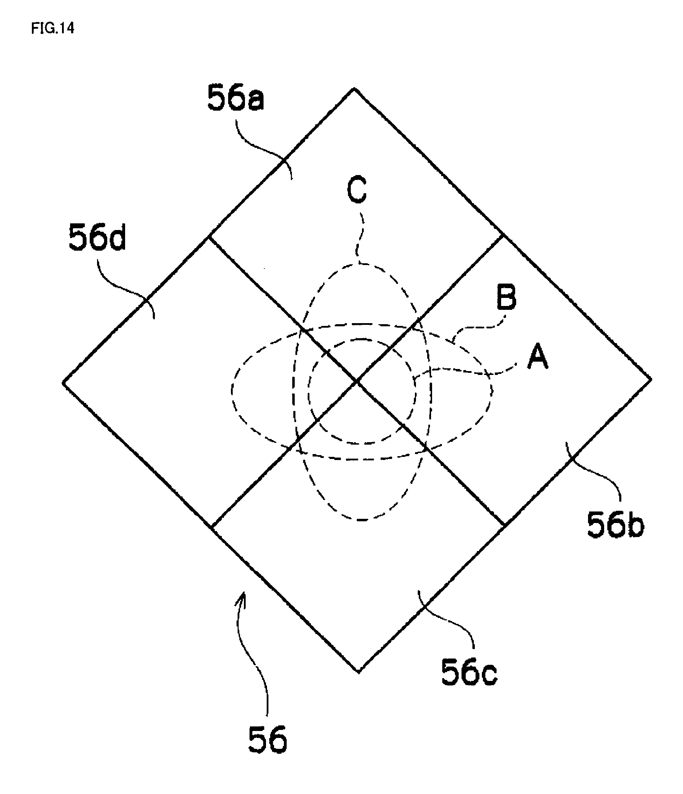

Focus control content when instructing such target value is more specifically described below. As stated above, focus control by servo circuit 13 is executed on the basis of signal issued from the photo detector 56 of optical pickup 10. When recording information in recording surface of the optical recording medium D, the servo circuit 13 drives the focus actuator 64 (see Fig. 4) so that circular return light (A in the diagram) may be received in the center of four areas 56a, 56b, 56c, 56d of photo detector 56 shown in Fig. 14. That is, supposing the quantities of light received in areas 56a, 56b, 56c, 56d to be a, b, c, d, respectively, the focus actuator 64 is driven so as to satisfy the relation of (a+c) - (b+d) = 0.

On the other hand, when forming a visible image in the image recording layer of the optical recording medium D, the focus is controlled so that laser light of larger diameter may be emitted to the image recording layer, than in the case of recording information in recording surface explained above. When the shape of return light received in the photo detector 56 shown in Fig. 14 is elliptical (B or C in the diagram), the spot size of laser light is larger than in the case of circular shape A, and the servo circuit 13 drives the focus actuator 64 so that the elliptical return light may be received in the photo detector 56. That is, the focus detector 64 is driven so as to satisfy the relation of (a+c) - (b+d) = α (α is not 0). In this embodiment, therefore, the control unit 16 and servo circuit 13 are combined to constitute beam spot control unit.

In this initialization control for forming visible image, when the control unit 15 instructs and sets α (not 0) in the servo circuit 13, laser light of larger spot diameter than in recording of information in recording surface can be applied to the image recording layer of the optical recording medium D. Thus, when forming a visible image in the image recording layer of the optical recording medium D, the following effects are obtained by emitting laser light of larger spot diameter than in the case of recording information in recording surface. That is, in the embodiment, when forming a visible image, same as when recording information in recording surface, laser light is emitted while the optical recording medium D is being rotated. Therefore, by increasing the beam spot diameter of laser light, the visible image can be formed in the entire region of the image recording layer of the optical recording medium D in a shorter time. As schematically shown in the diagram, comparing when the beam spot diameter BS of emitted laser light is larger or smaller, by one revolution of the optical recording medium D, the area of region for forming image is wider when the beam spot diameter BS is larger. Hence, when the beam spot diameter BS is smaller, the optical recording medium D must be rotated more in order to form the image in the entire region (in the shown example, 4 revolutions in large case, 6 revolutions in small case), and much time is spent for forming image. Owing to such reason, in the optical recording medium recording apparatus 100, it is designed to emit laser light of larger spot diameter when forming image than when recording information.

Also in initialization control for forming image, the control unit 16 instructs the target value of each level to the laser power control circuit 20 so that the laser light of light level and servo level suited to the acquired disk ID may be emitted from the optical pickup 10. That is, the ROM of the control unit 16 stores the light level and servo level as desired target values in each disk ID of plural types, and the control unit 16 reads out the target values of light level and servo level corresponding to the acquired disk ID, and instructs these target values to the laser power control circuit 20.

There are following reasons for setting the target values of power depending on the disk ID. That is, characteristics of pigments of the image recording layer may be different depending on the type of the optical recording medium D, and if characteristics are different, the characteristics will be also changed how much reflectivity is changed when how much laser power is emitted. Hence, in the image recording layer of a certain optical recording medium D, laser light of a certain light level is emitted, and if the reflectivity in the illuminated region can be changed sufficiently, it is not guaranteed that the reflectivity in the illuminated region can be changed similarly if laser light of same light level is emitted to the image recording layer of other optical recording medium D. Therefore, in the embodiment, in every optical recording medium corresponding to each type of disk ID, target values of light level and servo level capable of forming the image accurately are preliminarily determined by experiment. By storing the determined target values in the ROM in relation to the each disk ID, optimum power control is realized depending on the characteristics of the image recording layer of various types of the optical recording medium D.

When such initialization control is executed by the control unit 16, image forming process of actually forming a visible image in the image recording layer of the optical recording medium D is carried out. As shown in Fig. 12, the control unit 16 transfers the image data supplied from the host PC 110 through buffer memory 36 to the FIFO memory 34 (step Sa7). The control unit 16 judges if the specified reference position of the optical recording medium D rotated by the spindle motor 11 from the FG pulse signal supplied from the frequency generator 21 has passed the laser light emission position of the optical pickup 10 or not (step Sa8).

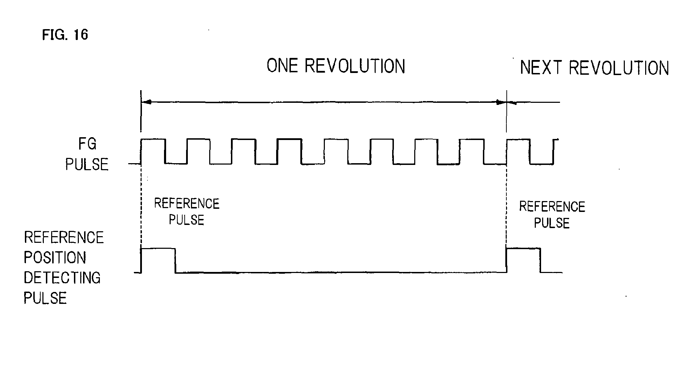

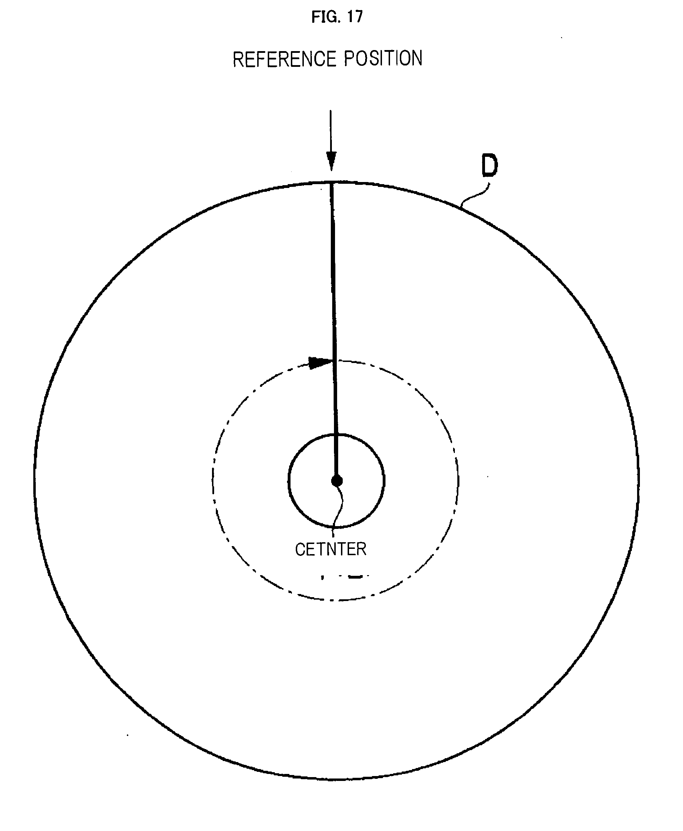

Referring now to Fig. 16 and Fig. 17, this is to explain the method for detecting whether the specified reference position and laser emission position have passed the specified position or not. As shown in Fig. 16, the frequency generator 21 continues to generate a specified number of (eight in this example) FG pulses during one revolution of spindle motor 11, that is, one revolution of the optical recording medium D. Therefore, the control unit 16 issues a reference position detecting pulse by synchronizing either one of FG pulses supplied from the frequency generator 21 with the rising timing of reference pulse, and thereafter generates reference position detection pulse signal for issuing reference position detection pulse by synchronizing with the rising timing of pulse of specified even number (eighth in the shown example) of pulse of one revolution from the reference position detection pulse. By generating such reference position detection pulse, the time of generation of this pulse is detected to be the timing of passing of the laser light emission position of optical pickup 10 through the reference position of the optical recording medium D. In other words, as shown in Fig. 17, supposing the laser light emission position of optical pickup 10 at the timing of generating the first reference position detection timing to be the position indicated by thick line in the diagram (the emission position is indicated by line because the optical pickup 10 is movable in radial direction), when the reference position detecting pulse generated one revolution after is generated, the laser light emission position of the optical pickup 10 also remains at the position indicated by thick line in the diagram. Thus, at the timing of generating the reference position detecting pulse for the first time, the line in radial direction to which the laser light emission position belongs is the reference position is the reference position, and the control unit 16 can detect that the emission position of laser light has passed the reference position of the optical recording medium D, on the basis of the reference position detection pulse generated in every revolution of the optical recording medium D. The single dotted line in the diagram shows an example of moving track of laser light emission position from generation of a certain reference position detecting pulse until generation of next reference position detection pulse.

After receiving image forming instruction from the host PC 110, when detecting that the reference position of the optical recording medium D has passed the emission position of laser light in the above technique, the control unit 16 increments 1 to the variable R showing the number of revolutions (step Sa9), and judges if R is odd number or not (step Sa10).

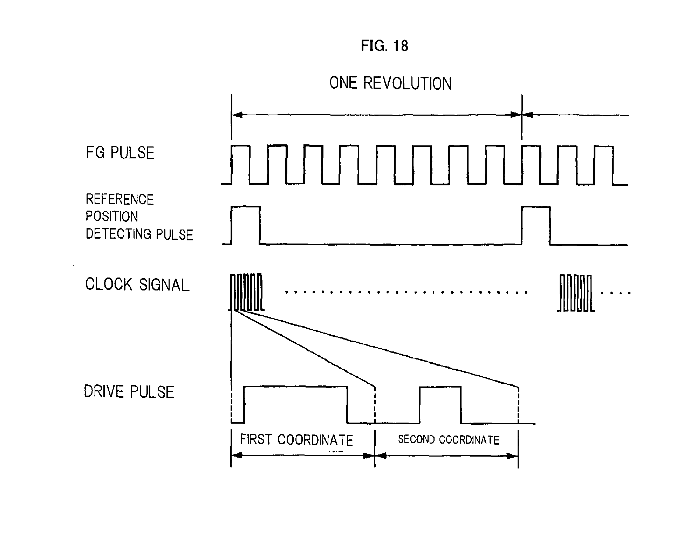

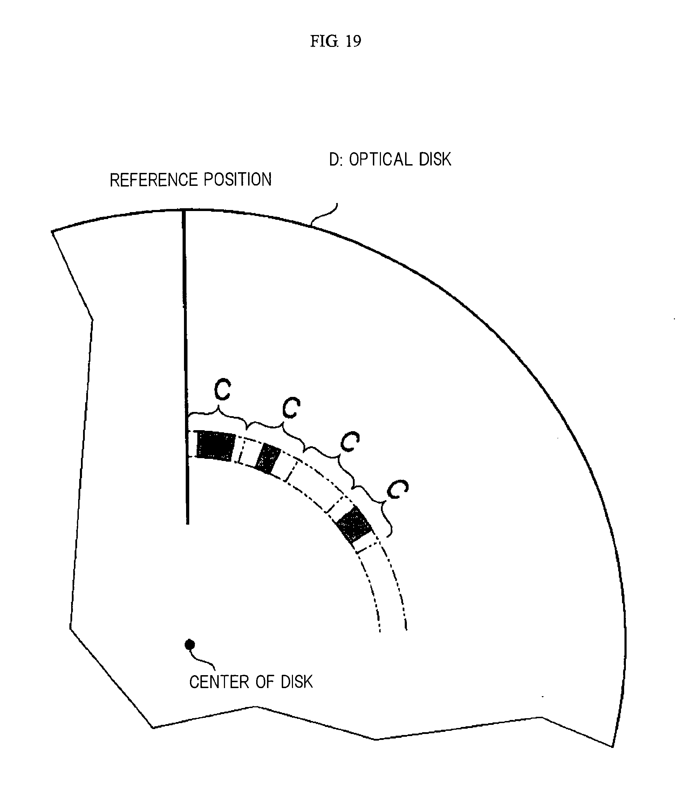

After receiving image forming instruction, when first detecting passing of the reference position, R = 0 (initial value) + 1 = 1, and in this case, it is judged that R is an odd number at step Sa10. When R is judged to be an odd number, the control unit 16 controls to emit laser light to the image recording layer of the optical recording medium D from the optical pickup 10 to form visible image (step Sa11). More specifically, the control unit 16 controls the parts so as to issue image data sequentially from the FIFO memory 34 in synchronism with the clock signal issued from the PLL circuit 33, from the moment of receiving the reference position detection pulse. By this control, as shown in Fig. 18, the FIFO memory 34 issues the information showing gradation degree of one coordinate to the drive pulse generator 35 every time clock pulse is supplied from the PLL circuit 33, and the drive pulse generator 35 generates a drive pulse of pulse width according to the gradation degree shown in the information, and issues to the laser driver 19. As a result, the optical pickup 10 emits the laser light to the image recording layer of the optical recording medium D at light level for the time depending on the gradation degree of each coordinate, and the reflectivity of illuminated region changes, and thereby a visible image as shown in Fig. 19 is formed.

As schematically shown in the diagram, since the optical recording medium D rotated by the spindle motor 11, the emission position of laser light of optical pickup 10 moves along the circumference by the portion of region indicated by C in the diagram for one period of clock signal (period from rising timing of pulse till rising timing of next pulse). While the laser light emission position passes this region C, by changing the time of emitting the laser light at the light level depending on the gradation degree as mentioned above, the reflectivity in different areas can be changed depending on the gradation degree of each coordinate in each region C as shown above. Thus, by controlling the emission time of laser light of light level when passing each region C depending on the gradation degree of each coordinate, visible image depending on the image data can be formed in the image recording layer of the optical recording medium D.

Thus when it is controlled to execute formation of visible image by laser beam emission controlled depending on image data, the process of control unit 16 returns to step Sa7, and the image data supplied from the buffer memory 36 is transferred to the FIFO memory 34. As a result, detecting whether the laser light emission position of optical pickup 10 has passed the reference position of the optical recording medium D or not, when it is detected that the reference position has been passed, R is incremented to 1. Consequently, when R becomes an even number, the control unit 16 controls the parts of the apparatus so as to stop forming of visible image by such laser light emitting control (step Sa12), and more specifically synchronizing with the clock signal supplied to the FIFO memory 34 from the PLL circuit 33, it is controlled so as not to issue the information showing the gradation degree of each coordinate to the driving pulse generator 35. That is, the control unit 16 controls so as not to emit laser light for changing the reflectivity of the image recording layer while the optical recording medium D is rotating next revolution after forming visible image by emitting laser light of light level to the image recording layer of the optical recording medium D.

Thus, when laser light emission for forming visible image is stopped, the control unit 16 instructs to move the optical pickup 10 to the outer side of radial direction by a specified amount to the motor controller 32 (step Sa13), and corresponding to the instruction, the motor controller 32 drives the stepping motor 30 through motor driver 31, and thereby the optical pickup 10 is moved to the outer circumference side by a specified amount.

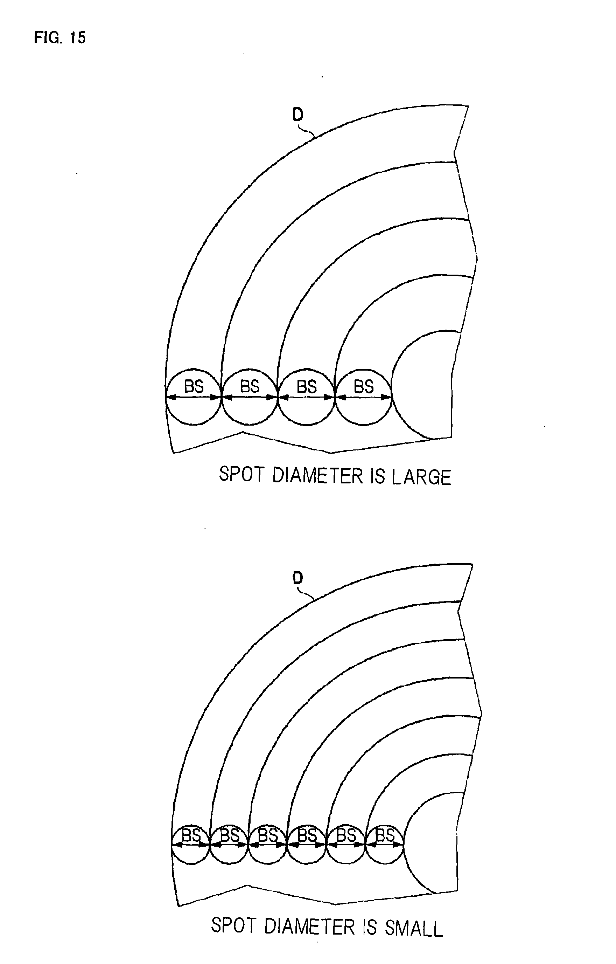

The specified amount of moving the optical pickup 10 in radial direction of the optical recording medium D may be determined properly depending on the beam spot diameter BS (see Fig. 15) emitted from the optical pickup 10 as stated above. That is, when forming a visible image in the image recording layer of circular optical recording medium D, the laser light emission position of optical pickup 10 must be moved on the surface of the optical recording medium D almost without gap in order to form an image of high quality. Therefore, when the unit moving amount of optical pickup 10 in radial direction is set nearly equal to the beam spot diameter BS of laser light emitted to the optical recording medium D, the laser light can be emitted almost without gap to the surface of the optical recording medium D, and an image of higher quality can be formed. Due to properties of the image recording layer and other factors, coloration may be formed in a wider region than the emitted beam spot diameter, and in such a case, considering the width of coloration region, the unit moving amount is determined so that the adjacent coloration regions may not overlap. In the embodiment, since the beam spot diameter BS is larger than when recording in recording surface (for example, about 20 µm), the control unit 16 controls the motor controller 32 so as to move the optical pickup 10 in the radial direction nearly by the same length as the beam spot diameter BS, and the stepping motor 30 is driven. A recent stepping motor 30 can control its moving amount in 10 µm units by utilizing the micro-step technology, and it is realized sufficiently by moving the optical pickup 10 in radial direction by 20 µm unit by using the stepping motor 30.

When the optical pickup 10 is thus controlled to be moved by specified amount in radial direction, the control unit 16 instructs a power level value after change as target when emitting laser light at light level to the laser power control circuit 20 so as to change the light level value of laser light as target (step Sa14). In the embodiment, to form the visible image, the CAV system is employed, that is, the laser beam is emitted while the optical recording medium D is rotated at a specified angular velocity, and when the optical pickup 10 is moved to the outer circumferential side, the linear velocity is increased. Therefore, when the optical pickup 10 is moved in radial direction (outer peripheral side), the laser light is changed so that the target value of light level may be larger than before, and hence if the linear velocity is changed, the reflectivity of the image recording layer of the optical recording medium D can be changed sufficiently, and intense laser power can be emitted.

By this control of moving of optical pickup 10 in radial direction and changing of target value of light level, the control unit 16 judges the image data not processed for forming visible image, that is, judges if there is image data not supplied yet to the drive pulse generator 35 or not, and terminates the process if there is no image data.

On the other hand, if there is image data not supplied yet to the motor controller 32, back to step Sa7, process for forming visible image continues. That is, image data is transferred from the control unit 16 to the FIFO memory 34 (step Sa7), and it is judged whether the emission position of laser light has reached the reference position of the optical recording medium D or not (step Sa8). If passing the reference position, the variable R showing the number of revolutions is incremented by 1 (step Sa9), and it is judged if the incremented variable R is an odd number or not (step Sa10). If the R is an odd number, the control unit 16 controls the parts of the apparatus so as to emit laser light for forming the visible image, and if the R is an even number, it stops emission of laser light for forming visible image (while the laser light of servo level is emitted), and controls to move the optical pickup 10 in radial direction, and controls to change the target value of light level. That is, when the control unit 16 emits laser light (including light level) for forming image to the optical recording medium D during revolution, it controls not to emit laser light for forming image in next revolution, and controls to move the optical pickup 10 in radial direction during this revolution. Thus, in the revolution not forming image, it controls to move the optical pickup 10 or change the target value of light level, and therefore image is not formed while the emission position or power value of emitted laser light is being changed by such control, and laser light for forming image can be emitted only after the emission position and laser light intensity are stabilized. It hence suppresses deterioration of quality of visible image to be formed due to moving control of optical pickup 10 in radial direction.

This is the principal operation of the optical recording medium recording apparatus 100, and according to this optical recording medium recording apparatus 100, without adding printing unit newly, all parts of the apparatus such as optical pickup 10 for recording information in recording surface are utilized to the maximum extent, and a visible image corresponding to image data can be formed by emitting laser light to the image recording layer of the optical recording medium D with image recording layer.

In the embodiment, since the laser light emission timing is controlled on the basis of clock signal generated by using FG pulse generated depending on the rotation of spindle motor 11, that is, clock signal generated depending on the rotation amount of the optical recording medium D, information of the laser light emission position is obtained within the optical recording medium recording apparatus 100, without requiring position information from the optical recording medium D side. Therefore, according to the optical recording medium recording apparatus 100, special optical recording medium D having pre-grooves (guide grooves) or the like in the image recording layer is not needed, and visible image corresponding to image data can be formed even in the image recording layer without pre-grooves or position information unit.

Recording of information (digital information) in the information recording layer is explained. In the case of the information recording layer of pigment type, unrecorded optical recording medium is rotated at specified recording linear velocity, and laser light is emitted from the laser pickup. By this emitted light, the pigment of the information recording layer absorbs light, and is locally raised in temperature, and specified pits are formed, and the optical characteristics are changed, and thus information is recorded.

In laser light recording waveform, when one pit is formed, either pulse train or one pulse may be used. What is important is the ratio to actual recording length (pit length).
Pulse width of laser light is preferably in a range of 20 to 95% of actual recording length, more preferably 30 to 90%, or further preferably 35 to 85%. In the case of recording waveform of pulse train, the sum should be in the specified range.

Power of laser light varies with recording linear velocity, and is preferably in a range of 1 to 100 mW at recording linear velocity of 3.5 m/s, more preferably 3 to 50 mW, or further preferably 5 to 20 mW. When the recording linear velocity is doubled, a preferred range of laser power is 2^{1/2} times.

The objective lens used in the pickup for enhancing the recording density is preferred to have NA of 0.55 or more, or 0.60 or more preferably.

In the invention, the recording light is semiconductor laser having oscillation wavelength of 350 to 850 nm.

Information recording layer of phase change type is explained. In the case of phase change type, the layer is consisted of specified material mentioned above, and the phase changes repeatedly between crystalline phase and noncrystalline phase by irradiation with laser light. When recording information, concentrated laser light pulse is emitted for a short time, and the phase change recording layer is partly fused. The fused portion is quenched by heat diffusion, and is solidified, and a noncrystalline record mark is formed. When erasing, laser light is emitted to the record mark area, and this area is heated to a temperature lower than melting point and higher than crystallizing point of the information recording layer, and is cooled gradually, and the noncrystalline record mark is crystallized to return to original unrecorded state.

### Example 1

The invention is more specifically described by referring to embodiments, but the invention is not limited to the embodiments.

### (Fabrication of the optical recording medium)

This example is a DVD-R type optical recording medium consisting of two adhered disks. The optical recording medium was fabricated in the following procedure.

First, by injection molding, from a polycarbonate resin, a substrate of 0.6 mm in thickness and 120 mm in outside diameter having spiral grooves (depth: 130 nm, width: 300 nm, track pitch: 0.74 nm) was formed. In 100 ml of 2,2,3,3-tetrafluoro-1-propanol, 1.0 g of pigment (1) was dissolved, and coating solution (1) was prepared, and this coating solution (1) was applied on the groove formed side of the substrate by spin coating, and an information recording layer was formed. On this information recording layer, Ag was sputtered, and a reflection layer of 120 nm in thickness was formed. On the reflection layer, ultraviolet curing resin mainly consisted of acrylate monomer (SD manufactured by Dainippon Ink and Chemicals Incorporated) was applied by spin coating, was cured by ultraviolet irradiation, and a protective layer of 10 um in thickness was formed.

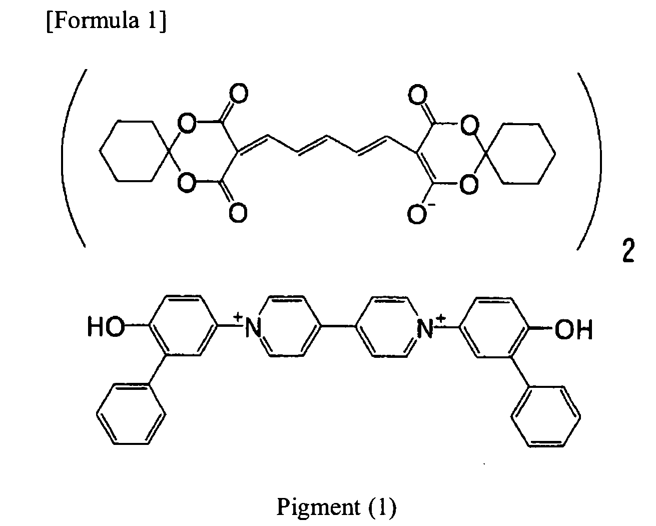

To manufacture a second substrate for forming an image recording layer, on a transfer surface of a flat nickel stamper without undulation for groove transfer, 0.5 normal aqueous solution of nitric acid was spread for 10 seconds, and then the surface was roughened. Using this stamper, one side was roughened by injection molding, and a second substrate of polycarbonate was manufactured in thickness of 0.6 mm and diameter of 120 mm. Surface roughness was measured by probe type roughness gauge (specific measuring conditions given below), and Rz of the roughened surface was 2.8 µm, and RSm was 90 µm.

### -Measuring condition by probe type roughness gauge-

The probe type roughness gauge was DekTak IIA manufactured by Veeco. At scan length of 20 mm, the surface was measured four times each in radial direction and tangential direction of stamper, and Rz and RSm were averaged to obtaine the measurement result.

To form a image recording layer, 0.8 of pigment (1) and 0.8 g of pigment (2) were dissolved in 100 ml of 2,2,3,3-tetrafluoro-1-propanol, and coating solution (2) was prepared, and this coating solution (2) was applied on the roughened side of the second substrate by spin coating, and an image recording layer was formed. On this image recording layer, Ag was sputtered, and a reflection layer of 120 nm in thickness was formed. On the reflection layer, ultraviolet curing resin mainly consisted of acrylate monomer (SD manufactured by Dainippon Ink and Chemicals Incorporated) was applied by spin coating, was cured by ultraviolet irradiation, and a protective layer of 10 µm in thickness was formed.

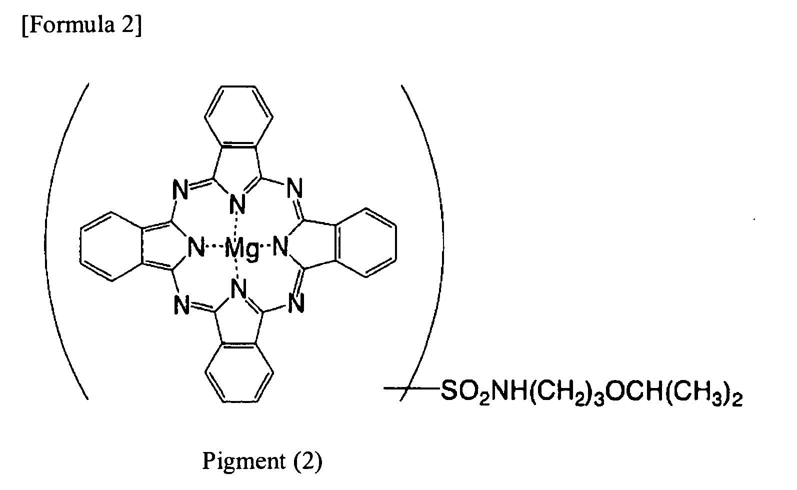

Successively, on the protective layers of the first substrate and the second substrate, ultraviolet curing resin mainly consisted of epoxy resin (SK7000 manufactured by Sony Chemicals) was applied by screen printing, was cured by ultraviolet irradiation, and the protective layers pressed face to face and laminated, and an optical recording medium was fabricated.

### Example 2

A second substrate was manufactured same as in example 1, except that the surface was roughened by changing the immersion time of nitric acid aqueous solution to 45 seconds. An optical recording medium was manufactured same as in example 1, except that this second substrate was used. Rz of the roughened surface was 10.6 µm, and RSm was 760 µm.

### Example 3

A second substrate was manufactured same as in example 1, except that the surface was roughened by using 0.2 normal aqueous solution of nitric acid and changing the immersion time of aqueous solution to 15 seconds. An optical recording medium was manufactured same as in example 1, except that this second substrate was used. Rz of the roughened surface was 0.3 µm, and RSm was 10 µm.

### Example 4

A second substrate was manufactured same as in example 1, except that the surface was roughened by using 1.0 normal aqueous solution of nitric acid. An optical recording medium was manufactured same as in example 1, except that this second substrate was used. Rz of the roughened surface was 5 µm, and RSm was 500 µm.

### Example 5

A second substrate was manufactured same as in example 1, except that the surface was roughened by using 0.2 normal aqueous solution of nitric acid. An optical recording medium was manufactured same as in example 1, except that this second substrate was used. Rz of the roughened surface was 0.2 µm, and RSm was 9 µm.

### Example 6

A second substrate was manufactured same as in example 1, except that the surface was roughened by using 0.8 normal aqueous solution of nitric acid and changing the immersion time of aqueous solution to 15 seconds. An optical recording medium was manufactured same as in example 1, except that this second substrate was used. Rz of the roughened surface was 6 µm, and RSm was 510 µm.

### Example 7

The surface of a molding die contacting with the image recording layer-forming side of the second substrate was blasted by using silicon carbide particles of average grain size of 150 µm, and electropolished, and a roughened molding die was manufactured. An optical recording medium was manufactured same as in example 1, except the second substrate formed by this molding die without using stamper was used. Rz of the roughened surface was 2.6 µm, and RSm was 110 µm.

### Example 8

A flat substrate was formed by using a stamper not having undulations for groove transfer. On one side of the substrate, a paint dispersing acrylic resin powder of average grain size of 15 µm in ultraviolet curing resin (SD-2200 manufactured by Dainippon Ink and Chemicals Incorporated) was applied by spin coating, and the coat film was cured by ultraviolet irradiation, and a roughened second substrate as manufactured. An optical recording medium was manufactured same as in example 1, except that this second substrate was used. Rz of the roughened surface was 4.1 µm, and RSm was 71 µm.

### Example 9

A flat surface of substrate formed same as in example 8 was blasted by using glass beads of average grain size of 50 µm, and the surface was roughened. An optical recording medium was manufactured same as in example 1, except that this second substrate was used. Rz of the roughened surface was 4.6 µm, and RSm was 138 µm.

### Example 10

A flat surface of substrate formed same as in example 8 was coated with DMF by spin coating, the surface was roughened by shaking off the solvent by spindle speed at 250 rpm for 15 second and increasing to 2300 rpm, and a second substrate was obtained. An optical recording medium was manufactured same as in example 1, except that this second substrate was used. Rz of the roughened surface was 3.1 µm, and RSm was 140 µm.

### Comparative example 1

A second substrate was manufactured same as in example 1, except that the stamper was not roughened when molding the second substrate. An optical recording medium was manufactured same as in example 1, except that this second substrate was used. In the second substrate of the optical recording medium, the image recording layer-forming side was not roughened and was smooth and flat.

### Comparative example 2

An optical recording medium was manufactured same as in example 1, except that the second substrate in example 1 was adhered so that the roughened surface may be exposed to the non-image recording layer-forming side.

### (Evaluation)

Optical recording media manufactured in examples and comparative examples were evaluated by using an apparatus for recording visible images, having at least a laser pickup for emitting laser light, and a rotating mechanism for rotating the optical recording medium, and recording and reproducing in the information recording layer were executed by emitting laser light from the laser pickup toward the information recording layer of the optical recording medium in state of rotation.

To record a visible image in the image recording layer, the optical recording medium and laser pickup were moved relatively along the surface of the optical recording medium, and in synchronism with relative move, the laser light was emitted toward the image recording layer while being modulated depending on the image forming text, pattern and image data, and a visible image was recorded. Such configuration of recording apparatus is disclosed, for example, in JP-A No. 2002-203321 and others.

Optical recording media manufactured in examples and comparative examples were set in the specified recording apparatus, and rotated at a speed of 1125 rpm, and were irradiated with low output laser light of 660 nm in wavelength and 30 mW in output, from the second substrate side (label side) of the optical recording medium, and visible images were formed in the image recording layers.

Visibility of formed visible images was evaluated by five inspectors. As a result, in all optical recording media of the examples, specular reflection was decreased, and visibility of formed visible images was excellent. In the optical recording media of the comparative examples, since the surface was not roughened, specular reflection was strong, and visibility was inferior. In the optical recording medium of comparative example 2, image was not formed satisfactorily when the image was recorded. Visibility of formed images was particularly excellent in optical recording media in examples 1, 3, 4, and 7 to 10, recording Rz of 0.3 to 5 µm, and RSm of 10 to 500 µm.

### Description of Reference Numerals

- 101: First substrate
- 201: Information recording layer
- 300, 401: Reflection layer
- 501: Second substrate
- 601: Image recording layer
- 701: Protective layer
- 801: Adhesive layer
- 10: Optical pickup
- 11: Spindle motor (rotation driving unit)
- 12: RF amplifier
- 13: Servo circuit
- 16: Control unit
- 17: Encoder
- 18: Strategy circuit
- 19: Laser driver
- 20: Laser power control circuit
- 21: Frequency generator
- 30: Stepping motor
- 31: Motor driver
- 32: Motor controller
- 33: PLL circuit
- 34: FIFO memory
- 35: Drive pulse generator
- 36: Buffer memory
- 53: Laser diode
- 53a: Front monitor diode
- 56: Photo detector
- 64: Focus actuator
- 65: Tracking actuator
- 100: Optical recording medium recording apparatus
- 270: Chucking unit
- 271: Adapter
- 280: Drive mechanism
- 320: Encoder
- D: Optical recording medium
- 500: Optical recording medium
- 512: First substrate
- 514: Information recording layer
- 516: First reflection layer
- 520: First laminated body
- 522: Second substrate
- 524: Image recording layer
- 526: Second reflection layer
- 528: Second laminated body
- 530: Adhesive layer
- 600: Prepit

## Claims

1. An optical recording medium comprising a first substrate on which at least an information recording layer and an image recording layer are formed in this order, and a second substrate formed on the image recording layer,
wherein a surface of an image recording layer side of the second substrate is roughened.

2. The optical recording medium of claim 1, wherein the maximum height (Rz) of the roughened surface of the second substrate is 0.3 to 5 µm, and the mean length (RSm) of a roughness curve element is 10 to 500 µm.

3. A method for manufacturing an optical recording medium having a first substrate on which at least an information recording layer and an image recording layer are formed in this order, and a second substrate formed on the image recording layer, the method comprising:
a roughening process of roughening a surface at an image recording layer-forming side of the second substrate,
an image recording layer forming process of forming the image recording layer on the roughened surface of the second substrate,
an information recording layer forming process of forming the information recording layer on the first substrate, and
a laminating process of adhering the first substrate and second substrate such that the information recording layer and the image recording layer facing each other as inner layers.

4. The method for manufacturing an optical recording medium of claim 3, wherein the roughening of the roughening process is conducted by molding the second substrate by using a stamper roughened at a side contacts the second substrate, and roughening the image recording layer-forming side of the second substrate.

5. The method for manufacturing an optical recording medium of claim 3, wherein the roughening of the roughening process is conducted by molding the second substrate by using a molding die roughened at a side contacts the second substrate, and roughening the image recording layer-forming side of the second substrate.

6. The method for manufacturing an optical recording medium of claim 3, wherein the roughening of the roughening process is conducted by molding the second substrate, applying a resin dispersion of fine particles on the image recording layer-forming side, curing the resin, and roughening the image recording layer-forming side of the second substrate.

7. The method for manufacturing an optical recording medium of claim 3, wherein the roughening of the roughening process is conducted by molding the second substrate, and machine-processing the image recording layer-forming side so as to roughen the image recording layer-forming side of the second substrate.

8. The method for manufacturing an optical recording medium of claim 3, wherein the roughening of the roughening process is conducted by molding the second substrate, chemically processing the image recording layer-forming side so as to roughen the image recording layer-forming side of the second substrate.

9. A substrate having at least one roughened side.

10. A method for using a substrate, the method comprising using the substrate of claim 9 in the optical recording medium.

11. A stamper having one roughened side.

12. A manufacturing method for stamper comprising a roughening process of roughening one side of the stamper.
